# EUROPÄISCHE PATENTANMELDUNG

(11) **EP 4 501 821 A2**
(43) Veröffentlichungstag der Anmeldung: **05.02.2025**
(21) Anmeldenummer: 24210912.2
(22) Anmeldetag: 02.02.2021
(51) Int. Cl.: B65G 47/74

(54) **ISOLATORSYSTEM ZUM FÜLLEN EINES BEHÄLTERS MIT EINER FLÜSSIGKEIT, ÜBERGABESTATION ZUM ÜBERGEBEN EINES BEHÄLTERS UND VERFAHREN DAZU**

(30) Priorität: 04.02.2020 DE 102020102768
(62) Teilanmeldung aus: 21703242.4
(71) Anmelder: GRONINGER & CO. GMBH, 74564 Crailsheim (DE)
(72) Erfinder: Merz, Armin, 73479 Ellwangen (DE); Engelhard, Roland, 91589 Aurach-Weinberg (DE); Veile, Josef, 73463 Westhausen (DE); Weinmann, Jens, 74564 Crailsheim (DE)
(74) Vertreter: Witte, Weller & Partner Patentanwälte mbB

(57) **Zusammenfassung**

Die vorliegende Erfindung betrifft eine Übergabestation (130) zum Übergeben eines Behälters (94) zwischen einem ersten Modul und einem zweiten Modul, wobei die Übergabestation (130) mindestens ein Aufnahme (134) zum Aufnehmen des Behälters (94) aufweist, wobei die Aufnahme (134) in einer Transferrichtung (140) zwischen den beiden Modulen zu beiden Modulen hin geöffnet ist, so dass der Behälter (94) in der Transferrichtung in die Aufnahme (134) mittels einer Handhabungseinrichtung des ersten Moduls einbringbar und in der Transferrichtung (140) aus der Aufnahme (134) mittels einer Handhabungseinrichtung des zweiten Moduls entnehmbar ist, wobei die Übergabestation (130) eine Haltevorrichtung (136) zum Halten des Behälters (94) in der Aufnahme (134) aufweist, wobei die Haltevorrichtung (136) eine Vorspanneinrichtung aufweist, die dazu ausgebildet ist, den Behälter quer, insbesondere senkrecht, zu der Transferrichtung (140) in einer definierten Position im Raum zur Übergabe zu klemmen, wobei die Vorspanneinrichtung durch zwei Klemmelemente (138', 138") ausgebildet wird, die senkrecht zu der Transferrichtung gegenüberliegend an der Aufnahme (134) angeordnet sind, und wobei die Klemmelemente (138', 138") derart angeordnet sind, dass sie beim Anordnen des Behälters zwischen den Klemmelementen (138', 138") auseinandergedrückt werden, um den Behälter zu klemmen. Des Weiteren betrifft die vorliegende Erfindung ein Verfahren (240) zum Übergeben eines Behälters (94) zwischen einem ersten Modul und einem zweiten Modul mittels einer derartigen Übergabestation (130).

## Beschreibung

Die vorliegende Erfindung betrifft modulare Isolatorsysteme und Verfahren zum Füllen eines Behälters mit einer Flüssigkeit. Des Weiteren betrifft die vorliegende Erfindung eine Übergabestation und ein Verfahren zum Übergeben eines Behälters zwischen einem ersten Modul und einem zweiten Modul.

Die vorliegende Erfindung beschäftigt sich in erster Linie mit aseptischen Isolatoren, die einen Füllbereich zum fluiden Befüllen von Objekten (z.B. Vials, Karpulen, Fläschchen, Spritzen und/oder dergleichen), beispielsweise mittels Füllnadeln, aufweisen. Unter dem Begriff "Isolator" ist allgemein ein abgeschlossener Raum zu verstehen, der gegenüber dem umgebenden Arbeitsraum hermetisch und gasdicht abgeschlossen ist. Innerhalb eines Isolators kann eine definierte Atmosphäre zur Bearbeitung empfindlicher oder gefährlicher Produkte erzeugt werden. Dazu kann beispielsweise eine Lüftungstechnik vorgesehen sein, mittels der die definierte Atmosphäre erzeugt wird.

In diesem Kontext werden Isolatoren üblicherweise in der biopharmazeutischen Prozesstechnik, beispielsweise als Teil einer Füllanlage mit mehreren Prozess- und Verarbeitungsstationen, verwendet, um eine hochreine oder sterile, sprich keimfreie Umgebung zu schaffen und eine Kontamination durch Keime, insbesondere Bakterien, Viren, Krankheitserreger und/oder dergleichen, zu vermeiden.

Der Transfer der Objekte zwischen den einzelnen Verarbeitungsstationen sowie die Handhabung der Handhabung der Objekte an den einzelnen Verarbeitungsstationen können beispielsweise manuell mittels Handschuheingriff durch eine Bedienperson erfolgen. Die Handschuheingriffe können des Weiteren dazu verwendet werden, um das Keimmonitoring während der Produktion zu handhaben oder eventuell Störungsbeseitigungen durchzuführen. Diese "manuelle" Handhabung mittels Handschuheingriff ist jedoch enorm zeitintensiv. Des Weiteren können Handschuhdurchführungen, welche in der Praxis aus Gummi- oder Kunststoff, insbesondere Butyl, bestehen, beim Greifen der zu handhabenden Objekte beschädigt werden. Handschuheingriffe stellen somit auch ein erhöhtes Kontaminations- und/oder Sicherheitsrisiko infolge von Leckagen dar. Das Nicht-Nutzen und im besten Fall das Weglassen von diesen Handschuheingriffen beseitigt somit das durch sie vorhanden Kontaminationsrisiko

Um dieses Kontaminationsrisiko innerhalb eines Isolators zu reduzieren, werden beispielsweise Handhabungseinrichtungen, wie beispielsweise Roboter, innerhalb des Isolators eingesetzt, um die zu füllenden Objekte innerhalb des Isolators zwischen den einzelnen Verarbeitungsstationen zu transferieren und um die Objekte an den einzelnen Verarbeitungsstationen zu handhaben.

Beispielsweise zeigt die Druckschrift WO 2016/198391 A1 ein Verfahren zum Befüllen und Verschließen von Flaschen, Kartuschen, Spritzen und dergleichen, wobei die Flaschen, Kartuschen, Spritzen und dergleichen allgemein als Behälter bezeichnet werden, wobei solche Behälter einzeln in jeweiligen Sitzen eines ersten Nestes untergebracht werden, das wiederum in einer ersten Transportwanne enthalten ist. Das Verfahren besteht aus Zuführen der Behälter, die einzeln in jeweiligen Sitzen des ersten Nestes untergebracht sind, das wiederum der ersten Transportwanne zugeordnet ist; Entnehmen jeweils mindestens eines einzelnen Behälters aus dem ersten Nest und Überführen des mindestens einen Behälters zu einer Füllstation, um diesen mit einer Substanz zu füllen; Überführen des mindestens einen gefüllten Behälters zu einer Stopfensetzstation, um einen Stopfen auf den Behälter aufzusetzen; Überführen des mindestens einen gefüllten Behälters zu einer Bördelstation, wobei der Behälter durch eine Trennwand gegeben wird; Verschließen des mindestens einen Behälters an der Bördelstation; Einsetzen des mindestens einen verschlossenen Behälters in einen jeweiligen Sitz eines zweiten Nestes. Die Füllstation und die Stopfensetzstation sind in einem Füllmodul angeordnet. Die Bördelstation ist in einem Bördelmodul angeordnet. Die Trennwand ist zwischen dem Füllmodul und dem Bördelmodul angeordnet. Das Füllmodul und das Bördelmodul weisen jeweils eine Handhabungseinrichtung auf, mittels der die Behälter in dem jeweiligen Modul gehandhabt werden.

Die bekannten Isolatorsysteme und Verfahren lassen aber noch Raum für Verbesserungen hinsichtlich Durchsatzrate, Aufbau und Handhabung.

Es ist daher eine Aufgabe der vorliegenden Erfindung ein verbessertes Isolatorsystem und ein verbessertes Verfahren zum Füllen eines Behälters mit einer Flüssigkeit bereitzustellen. Insbesondere ist es eine Aufgabe der vorliegenden Erfindung die Durchsatzrate zu erhöhen sowie den Aufbau und die Handhabung zu vereinfachen.

In einem ersten Aspekt wird ein Isolatorsystem zum Füllen eines Behälters mit einer Flüssigkeit, wobei das System aufweist:
- ein Füllmodul mit einer Füllstation zum Füllen des Behälters mit der Flüssigkeit, mit einer Stopfensetzstation zum Aufsetzen eines Stopfens auf den gefüllten Behälter und mit einer Mehrzahl von Handhabungseinrichtungen zum Handhaben des Behälters innerhalb des Füllmoduls;
- eine erste Übergabestation zum Übergeben des zu füllenden Behälters in das Füllmodul;
- eine zweite Übergabestation zum Übergeben des gefüllten Behälters aus dem Füllmodul; und
- eine Steuerungseinrichtung,
wobei die Steuerungseinrichtung dazu eingerichtet ist, die Füllstation, die Stopfensetzstation und die Mehrzahl von Handhabungseinrichtungen derart zu steuern, dass die folgenden Schritte ausgeführt werden:
- erstes Transferieren des zu füllenden Behälters von der ersten Übergabestation zu der Füllstation mittels einer oder mehrerer Handhabungseinrichtungen der Mehrzahl von Handhabungseinrichtungen;
- Füllen des Behälters mit der Flüssigkeit in der Füllstation;
- zweites Transferieren des Behälters von der Füllstation zu einer Stopfensetzstation mittels einer oder mehrerer Handhabungseinrichtungen der Mehrzahl von Handhabungseinrichtungen;
- Aufsetzen eines Stopfens auf den gefüllten Behälter in der Stopfensetzstation;
- drittes Transferieren des Behälters von der Stopfensetzstation zu der zweiten Übergabestation mittels einer oder mehrerer Handhabungseinrichtungen der Mehrzahl von Handhabungseinrichtungen.

In einem zweiten Aspekt wird ein Verfahren zum Füllen eines Behälters mit einer Flüssigkeit in einem Füllmodul eines Isolatorsystems bereitgestellt, wobei das Verfahren die folgenden Schritte aufweist:
- Anordnen des zu füllenden Behälters in einer ersten Übergabestation zum Übergeben des Behälters in das Füllmodul;
- erstes Transferieren des Behälters von der ersten Übergabestation zu einer Füllstation des Füllmoduls mittels einer oder mehrerer Handhabungseinrichtungen einer Mehrzahl von Handhabungseinrichtungen des Füllmoduls;
- Füllen des Behälters mit der Flüssigkeit in der Füllstation;
- zweites Transferieren des Behälters von der Füllstation zu einer Stopfensetzstation des Füllmoduls mittels einer oder mehrerer Handhabungseinrichtungen der Mehrzahl von Handhabungseinrichtungen;
- Aufsetzen eines Stopfens auf den Behälter in der Stopfensetzstation;
- drittes Transferieren des Behälters von der Stopfensetzstation zu einer zweiten Übergabestation zum Übergeben des Behälters aus dem Füllmodul mittels einer oder mehrerer Handhabungseinrichtungen der Mehrzahl von Handhabungseinrichtungen.

Das Isolatorsystem kann ein System sein, dass innerhalb eines Isolators angeordnet ist. Insbesondere können innerhalb des Isolators die einzelnen Module des Systems angeordnet sein. Des Weiteren kann das Isolatorsystem auch ein Isolator sein, in dem die einzelnen Module des Systems angeordnet sind.

Der Behälter ist vorzugsweise ein pharmazeutischer Behälter, beispielsweise eine Spritze, ein Vial, eine Flache, eine Zylinderampulle oder dergleichen. Der Behälter ist vorzugsweise zylinderförmig. Dies bedeutet, dass der Behälter im Querschnitt kreiszylindrisch ist. Die Flüssigkeit ist vorzugsweise eine pharmazeutische, kosmetische oder toxische Flüssigkeit.

Die Füllstation weist Mittel zum Füllen des Behälters auf. Die Füllstation kann dazu beispielsweise eine oder mehrere Füllnadeln zum Abgeben der Flüssigkeit in einen Behälter aufweisen. Die Füllstation kann des Weiteren eine Dosiereinrichtung aufweisen, mittels der die abzugebende Flüssigkeitsmenge dosiert werden kann. Die Füllstation kann mit einem Flüssigkeitsreservoir, insbesondere einem Tank, über einen oder mehrere Schläuche verbunden sein. Die Dosiereinrichtung kann in einem Fluidpfad zwischen dem Flüssigkeitsreservoir und der Füllnadel angeordnet sein. Das Flüssigkeitsreservoir kann innerhalb oder außerhalb des Füllmoduls angeordnet sein. Des Weiteren kann die Füllstation derart ausgebildet sein, dass mehrere, insbesondere zwei, Behälter gleichzeitig gefüllt werden können. Dazu kann die Füllstation beispielsweise mehrere, insbesondere zwei, Füllnadeln aufweisen.

Die Stopfensetzstation weist Mittel zum Aufsetzen eines Stopfens auf. Dazu kann die Stopfensetzstation beispielsweise eine Trägerstruktur und Stopfensetzvorrichtung aufweisen, die mittels der Trägerstruktur bewegbar ist. Die Stopfensetzvorrichtung ist dazu ausgebildet, einen Stopfen in die Öffnung des Behälters einzusetzen. Die Stopfensetzstation kann des Weiteren eine Zuführung aufweisen, über die der Stopfensetzvorrichtung die Stopfen zugeführt werden. Die Stopfensetzstation kann mit einem Stopfenreservoir verbunden sein, in dem eine Mehrzahl von Stopfen gelagert ist. Das Stopfenreservoir kann eine Vereinzelungseinrichtung aufweisen, in der die Stopfen vereinzelt werden, bevor diese über die Zuführung der Stopfensetzvorrichtung vereinzelt zugeführt werden. Alternativ kann die Zuführung über eine lose Bereitstellung der Stopfen auf einer Platte erfolgen. Die Lage der Stopfen kann über eine Sensoreinrichtung, beispielsweise ein Kamera, erkannt werden. Die Stopfensetzvorrichtung kann einen Roboter aufweisen, der anhand der erkannten Lage einen Stopfen aufgreifen und der Stopfensetzvorrichtung zuführt oder direkt auf den Behälter aufsetzt. Des Weiteren kann die Stopfensetzstation derart ausgebildet sein, dass auf mehrere, insbesondere zwei, Behälter gleichzeitig ein Stopfen aufgesetzt werden kann.

Jede Handhabungseinrichtung weist Mittel zum Handhaben des Behälters auf. Beispielsweise kann jede Handhabungseinrichtung einen Roboter mit Endeffektor aufweisen. Der Roboter kann beispielsweise eine, vorzugsweise mehrachsigen, Trägerstruktur aufweisen, an dessen Ende der Endeffektor angebracht ist. Mittels der Trägerstruktur kann der Endeffektor innerhalb des Füllmoduls bewegt werden. Der Endeffektor kann dazu ausgebildet sein, den Behälter zu handhaben. Dazu kann der Endeffektor ein Greifwerkzeug aufweisen, mittels dem der Endeffektor den Behälter greifen kann.

Unter Transferieren des Behälters ist zu verstehen, dass der Behälter von einem ersten Ort, beispielsweise der Füllstation, zu einem zweiten Ort, beispielsweise der Stopfensetzstation, bewegt wird. Zum Transferieren des Behälters kann beispielsweise eine Handhabungseinrichtung den Behälter am ersten Ort aufnehmen bzw. greifen, zum zweiten Ort bewegen und am zweiten Ort wieder freigeben.

Des Weiteren kann jede Handhabungseinrichtung derart ausgebildet sein, dass sie mehrere, insbesondere zwei, Behälter gleichzeitig handhaben kann. Dazu kann jede Handhabungseinrichtung beispielsweise einen Endeffektor mit mehreren, insbesondere zwei, Greifwerkzeugen aufweisen.

Die Steuerungseinrichtung ist dazu eingerichtet, ein oder mehrere, insbesondere alle, Module des Isolatorsystems zu steuern. Dazu kann die Steuerungseinrichtung Steuerbefehle an die Handhabungseinrichtungen und Stationen des jeweiligen Moduls des Isolatorsystems senden, um die jeweiligen Steuerungsschritte des Verfahrens auszuführen. Beispielsweise kann die Steuerungseinrichtung Steuerbefehle an die Füllstation senden, um den Behälter zu füllen. Des Weiteren kann die Steuerungseinrichtung Steuerbefehle an eine oder mehrere Handhabungseinrichtungen senden, um den Behälter zu transferieren. Des Weiteren kann die Steuerungseinrichtung Steuerbefehle an die Stopfensetzstation senden, um einen Stopfen auf den Behälter aufzusetzen.

Die Steuerungseinrichtung kann dazu eine speicherprogrammierbare Steuerung (SPS), einen integrierten Schaltkreis (IC) (beispielsweise ein Mikrocontroller, ein Field Programmable Gate Array (FPGA) oder eine anwendungsspezifische integrierte Schaltung (ASIC)) oder einen Computer mit einem Prozessor aufweisen, mittels dem nach einem vorgegebenen Programm die Steuerbefehle generiert werden. Das Programm kann beispielsweise auf einem permanenten Speichermedium gespeichert sein.

Bisher war es im Stand der Technik üblich, dass in einem Füllmodul nur eine Handhabungseinrichtung eingesetzt wird, mittels der ein Behälter zu einer Füllstation transferiert wird, nach dem Füllen von der Füllstation zu einer Stopfensetzstation transferiert wird und nach dem Stopfensetzen von der Stopfensetzstation weiter transferiert wird.

Dadurch, dass das Füllmodul mehrere Handhabungseinrichtungen zum Handhaben des Behälters aufweist, ist es möglich, dass die einzelnen Transferschritte von unterschiedlichen Handhabungseinrichtungen durchgeführt werden. Insbesondere wenn mehrere Behälter nacheinander in dem Füllmodul gefüllt werden, können mehrere Behälter in dem Füllmodul gleichzeitig zu unterschiedlichen Verarbeitungsstationen transferiert werden. Insbesondere können die Schritte des ersten Transferierens, des zweiten Transferierens, und des dritten Transferierens parallel für verschiedene Behälter ausgeführt werden. Beispielsweise kann ein zu füllender Behälter mittels einer ersten Handhabungseinrichtung von der Übergabestation zu der Füllstation transferiert werden, während ein bereits gefüllter Behälter mittels einer zweiten Handhabungseinrichtung von Füllstation zu der Stopfensetzstation oder von der Stopfensetzstation zu der zweiten Übergabestation transferiert wird. Auf diese Weise kann im Vergleich zu dem Handling mittels einer einzigen Handhabungseinrichtung die Durchsatzrate bzw. die Verarbeitungsgeschwindigkeit erhöht werden. In anderen Worten wird dadurch die Durchsatzrate im Füllprozess gesteigert.

In einem dritten Aspekt wird ein Isolatorsystem zum Füllen eines Behälters mit einer Flüssigkeit bereitgestellt, wobei das Isolatorsystem aufweist:
- ein Füllmodul mit einer Füllstation zum Füllen des Behälters mit der Flüssigkeit und mit einer ersten Handhabungseinrichtung zum Handhaben des Behälters innerhalb des Füllmoduls;
- eine erste Übergabestation zum Übergeben des zu füllenden Behälters in das Füllmodul; und
- eine Steuerungseinrichtung,
wobei die Füllstation eine Füllnadel zum Abgeben der Flüssigkeit aufweist, wobei die Steuerungseinrichtung dazu eingerichtet ist, die Füllstation und die erste Handhabungseinrichtung derart zu steuern, dass die folgenden Schritte ausgeführt werden:
- erstes Transferieren des zu füllenden Behälters von der ersten Übergabestation zu der Füllstation mittels der ersten Handhabungseinrichtung;
- Füllen des Behälters mit der Flüssigkeit in der Füllstation mittels der Füllnadel; und
- Bewegen des Behälters relativ zu der Füllnadel mittels der ersten Handhabungseinrichtung, während der Behälter gefüllt wird.

In einem vierten Aspekt wird ein Verfahren zum Füllen eines Behälters mit einer Flüssigkeit in einem Füllmodul eines Isolatorsystems bereitgestellt, wobei das Verfahren die folgenden Schritte aufweist:
- Anordnen des zu füllenden Behälters in einer ersten Übergabestation zum Übergeben des Behälters in das Füllmodul;
- erstes Transferieren des Behälters von der ersten Übergabestation zu einer Füllstation des Füllmoduls mittels einer ersten Handhabungseinrichtung des Füllmoduls;
- Füllen des Behälters mit der Flüssigkeit in der Füllstation mittels einer Füllnadel der Füllstation; und
- Bewegen des Behälters relativ zu der Füllnadel mittels der ersten Handhabungseinrichtung, während der Behälter gefüllt wird.

Bisher war es im Stand der Technik üblich, dass der zu füllende Behälter zuerst in der Füllstation abgesetzt und dann gefüllt wird. Während des Füllens wird der Füllnadelträger, der die Füllnadeln trägt, relativ zu dem Behälter bewegt, so dass die Füllnadeln relativ zu dem Behälter bewegt werden, um beim Füllen des Behälters Blasenbildung in dem Behälter zu vermeiden. Dazu wird die Füllnadel derart während des Füllens bewegt, dass die Spitze der Füllnadel nahe der Oberfläche der Flüssigkeit angeordnet ist.

Nach dem dritten und vierten Aspekt wird nun vorgeschlagen, diese Relativbewegung stattdessen mittels der ersten Handhabungseinrichtung auszuführen. Dadurch ist zum Ausführen der Relativbewegung keine zusätzliche Mechanik notwendig, wodurch der Aufbau des Isolatorsystems vereinfacht wird. Zudem muss der Behälter zum Füllen auch nicht mehr in der Füllstation abgesetzt werden. Stattdessen kann der Behälter einfach mittels der ersten Handhabungseinrichtung unter die Füllnadel gehalten werden. Auf diese Weise wird die Handhabung während des Füllprozesses verbessert und die Durchsatzrate erhöht.

In einem fünften Aspekt wird eine Übergabestation zum Übergeben eines Behälters zwischen einem ersten Modul und einem zweiten Modul bereitgestellt, wobei die Übergabestation mindestens ein Aufnahme zum Aufnehmen des Behälters aufweist, wobei die Aufnahme in einer Transferrichtung zwischen den beiden Modulen zu beiden Modulen hin geöffnet ist, so dass der Behälter in der Transferrichtung in die Aufnahme einbringbar mittels einer Handhabungseinrichtung des ersten Moduls und in der Transferrichtung aus der Aufnahme mittels einer Handhabungseinrichtung des zweiten Moduls entnehmbar ist, und wobei die Übergabestation eine Haltevorrichtung zum Halten des Behälters in der Aufnahme aufweist

In einem sechsten Aspekt wird ein Verfahren zum Übergeben eines Behälters zwischen einem ersten Modul und einem zweiten Modul mittels einer Übergabestation mit einer Aufnahme zum Aufnehmen des Behälters bereitgestellt, wobei die Aufnahme in einer Transferrichtung zwischen den beiden Modulen zu beiden Modulen hin geöffnet ist, wobei das Verfahren die folgenden Schritte aufweist:
- Einbringen des Behälters in die Aufnahme mittels einer Handhabungseinrichtung des ersten Moduls in der Transferrichtung;
- Halten des Behälters in der Aufnahme mittels einer Haltevorrichtung; und
- Entnehmen des Behälters aus der Aufnahme mittels einer Handhabungseinrichtung des zweiten Moduls in der Transferrichtung.

Das erste Modul und das zweite Modul können Module eines Isolatorsystems, beispielsweise des Isolatorsystems nach dem ersten oder dritten Aspekt, sein. Die Module grenzen aneinander an und sind mittels der Übergabestation miteinander verbunden. Beispielsweise können die Module ein Entnehmemodul, ein Füllmodul, ein Bördelmodul, ein Gefriertrocknungsmodul, oder ein Außenwaschmodul sein.

Unter der Transferrichtung ist die Richtung von dem ersten zu dem zweiten Modul zu verstehen. In anderen Worten ist die Transferrichtung die Richtung, in die der Behälter bewegt wird, wenn er von dem ersten Modul in das zweite Modul transferiert wird.

Der Behälter wird in der Transferrichtung in die Aufnahme eingebracht. Dies bedeutet, dass die Aufnahme derart zu dem ersten Modul hin geöffnet ist, dass der Behälter durch eine Bewegung in der Transferrichtung in die Aufnahme eingebracht werden kann.

Entsprechend wird der Behälter in der Transferrichtung aus der Aufnahme entnommen. Dies bedeutet, dass die Aufnahme derart zu dem zweiten Modul hin geöffnet ist, dass der Behälter durch eine Bewegung in der Transferrichtung aus der Aufnahme entnommen werden kann.

Ist der Behälter in der Aufnahme angeordnet, wird der Behälter mittels der Haltevorrichtung gehalten. Der Behälter wird dabei derart gehalten, dass der Behälter in der Transferrichtung entnommen werden kann.

Bisher war es im Stand der Technik immer erforderlich, einen Behälter in eine Aufnahme einer Übergabestation einzusetzen und zu entnehmen, was eine Bewegung senkrecht zur Transferrichtung bzw. eine vertikale Bewegung erfordert kann. Mittels der Übergabestation nach dem fünften und sechsten Aspekt kann der Behälter direkt in der Transferrichtung in die Aufnahme eingesetzt bzw. aus dieser wieder entnommen werden, ohne dass eine Bewegung senkrecht zu der Transferrichtung erforderlich ist. Auf diese Weise kann der Behälter einfach zwischen zwei Modulen übergeben werden, wodurch die Handhabung vereinfacht wird und die Durchsatzrate erhöht wird.

Die eingangs gestellte Aufgabe wird somit vollumfänglich gelöst.

In einer ersten Ausgestaltung weist die Mehrzahl von Handhabungseinrichtungen eine erste Handhabungseinrichtung und eine zweite Handhabungseinrichtung auf.

Mittels zweier Handhabungseinrichtungen können die Steuerungsschritte in dem Füllmodul schneller ausgeführt werden, da die Verfahrensschritte auf die zwei Handhabungseinrichtungen aufgeteilt werden können. Auf diese Weise können einzelne Verfahrensschritte beim Handhaben mehrerer Behälter gleichzeitig durchgeführt werden, wodurch die Durchsatzrate erhöht, insbesondere verdoppelt, wird.

In einer weiteren Ausgestaltung werden der Schritt des ersten Transferierens mittels der ersten Handhabungseinrichtung, der Schritt des zweiten Transferierens mittels der ersten Handhabungseinrichtung und/oder der zweiten Handhabungseinrichtung und der Schritt des dritten Transferierens mittels der zweiten Handhabungseinrichtung durchgeführt werden.

Auf diese Weise kann mittels zweier Handhabungseinrichtungen ein erster zu füllender Behälter zum Füllen transferiert werden, während ein zweiter gefüllter Behälter zeitgleich zum Stopfensetzen und/oder zur zweiten Übergabestation transferiert werden kann. Auf diese Weise können einzelne Verfahrensschritte beim Handhaben mehrerer Behälter gleichzeitig durchgeführt werden, wodurch die Durchsatzrate erhöht, insbesondere verdoppelt, wird.

In einer weiteren Ausgestaltung weist das Füllmodul zwischen der Füllstation und der Stopfensetzstation eine Zwischenstation auf, wobei in dem Schritt des zweiten Transferierens die erste Handhabungseinrichtung den Behälter von der Füllstation zu der Zwischenstation transferiert, und die zweite Handhabungseinrichtung den Behälter von der Zwischenstation zu der Stopfensetzstation transferiert.

Dabei wird somit der Schritt des zweiten Transferierens zum einen Teil mittels der ersten Handhabungseinrichtung und zum anderen Teil mit der zweiten Handhabungseinrichtung durchgeführt.

In einer weiteren Ausgestaltung weist das Isolatorsystem des Weiteren ein Entnahmemodul zum Entnehmen des zu füllenden Behälters aus einem Nest auf.

Eine Mehrzahl von zu füllenden Behältern wird in einem Nest bereitgestellt. Das Nest kann in einer Transportwanne (Tub) über eine Transferschleuse in den Isolator eingeführt werden. Die Transferschleuse stellt einen Anlageneingang dar. Die Transferschleuse kann als H2O2-Schleuse ausgebildet sein. Neben einer H2O2-Schleuse gibt es noch weitere Möglichkeiten, wie die Transportwanne in das Entnahmemodul gelangen kann. Beispielsweise können Dekontaminationskammern mit den Verfahren Elektronenstrahl, Plasmastrahl, Gammastrahl oder Stickstoffdioxid eingesetzt sein. Es kann auch ohne Sterilisationsverfahren gearbeitet werden, indem die Transportwannen nach dem Aufschneiden des Außenbeutels direkt in das Entnahmemodul geschoben bzw. transferiert werden. Die Transportwanne kann manuell oder maschinell in die Transferschleuse eingangsseitig eingelegt werden, nachdem insbesondere ein Außenbeutel um diese herum aufgeschnitten worden ist. Es kann es Weiteren ein Öffnen der Transportwanne, eine Entfernen des geöffneten Außenbeutels und/oder eines Innenbeutels und/oder ein Herausheben des Nests aus der Transportwanne erfolgen. Bei geschlossener Schleuse wird die Transportwanne dann gegebenenfalls mit Nest über Wasserstoffperoxid (H2O2) oder eines der anderen obigen Verfahren dekontaminert. Anschließend wird der Zugang zu dem Entnahmemodul geöffnet und die Verarbeitung beginnt. Das Entnahmemodul kann eine Entnahmestation und eine Handhabungseinrichtung aufweisen. In der Entnahmestation kann das Nest gehalten werden oder abgestellt sein, während die Handhabungseinrichtung jeden Behälter einzeln aus dem Nest entnimmt, zu der ersten Übergabestation transferiert und darin zum Übergeben an das Füllmodul anordnet. Die Handhabungseinrichtung kann auch derart ausgebildet sein, dass sie mehrere, insbesondere zwei, Behälter gleichzeitig aus dem Nest entnehmen und in der Übergabestation anordnen kann.

In einer weiteren Ausgestaltung ist das Entnahmemodul stromaufwärts von dem Füllmodul angeordnet.

Das Entnahmemodul ist somit vor dem Füllmodul angeordnet. Die Behälter werden somit zuerst aus dem Nest entnommen und dann an das Füllmodul übergeben.

In einer weiteren Ausgestaltung ist die erste Übergabestation zwischen dem Entnahmemodul und dem Füllmodul angeordnet.

Auf diese Weise kann der Behälter in dem Entnahmemodul entnommen werden und direkt an das Füllmodul übergeben werden.

In einer weiteren Ausgestaltung weist das Isolatorsystem des Weiteren ein Bördelmodul zum Verschließen des gefüllten Behälters auf.

Das Bördelmodul kann eine Bördelstation und eine oder mehrere Handhabungseinrichtungen zum Handhaben des gefüllten Behälters aufweisen. In der Bördelstation wird der Behälter mittels eines Deckels, insbesondere einer Aluminiumkappe, verschlossen. Dazu wird der Deckel in der Bördelstation auf die Öffnung des Behälters aufgesetzt und auf dem oberen Rand des Behälters gebördelt. Dieser Vorgang wird daher auch als "Bördeln" bezeichnet. Die Bördelstation kann des Weiteren eine Zuführung aufweisen, über die Deckel zugeführt werden können. Die Bördelstation kann mit einem Deckelreservoir verbunden sein, in dem eine Mehrzahl von Deckeln gelagert ist. Das Deckelreservoir kann eine Vereinzelungseinrichtung aufweisen, in der die Deckel vereinzelt werden, bevor diese über die Zuführung der Bördelstation vereinzelt zugeführt werden. Der gefüllte Behälter kann von der zweiten Transferschleuse zu der Bördelstation mittels einer oder mehrerer der Handhabungseinrichtungen transferiert werden. Alternativ kann die Zuführung über eine lose Bereitstellung der Deckel auf einer Platte erfolgen. Die Lage der Deckel kann über eine Sensoreinrichtung, beispielsweise ein Kamera, erkannt werden. Die Bördelstation kann einen Roboter aufweisen, der anhand der erkannten Lage einen Deckel aufgreift und der Bördelstation zuführt oder direkt auf die Öffnung des Behälters aufsetzt. Des Weiteren kann die Bördelstation derart ausgebildet sein, dass mehrere, insbesondere zwei, Behälter gleichzeitig verschlossen werden können.

In einer weiteren Ausgestaltung ist das Bördelmodul stromabwärts von dem Füllmodul angeordnet, insbesondere wobei das Füllmodul zwischen dem Entnahmemodul und dem Bördelmodul angeordnet ist.

Das Bördelmodul ist somit nach dem Füllmodul angeordnet. Die Behälter werden somit zuerst in dem Füllmodul gefüllt und dann an das Bördelmodul übergeben.

In einer weiteren Ausgestaltung ist die zweite Übergabestation zwischen dem Füllmodul und dem Bördelmodul angeordnet.

Auf diese Weise kann der Behälter in dem Füllmodul gefüllt werden und direkt an das Bördelmodul zum Verschließen übergeben werden.

In einer weiteren Ausgestaltung weist das Isolatorsystem des Weiteren ein Gefriertrocknungsmodul zum Gefriertrocknen der gefüllten Behälter auf.

Das Gefriertrocknungsmodul kann dazu einen Gefriertrockner aufweisen, in dem der Behälter gefriergetrocknet werden kann. Alternativ kann der Gefriertrockner auch außerhalb des Isolators angeordnet sein, wobei der Gefriertrockner mit dem Isolator, insbesondere mit dem Gefriertrocknungsmodul koppelbar ist. Das Gefriertrocknungsmodul kann des Weiteren eine oder mehrere Handhabungseinrichtungen zum Handhaben des gefüllten Behälters aufweisen. Mittels der Handhabungseinrichtungen kann der Behälter innerhalb des Gefriertrocknungsmoduls gehandhabt, insbesondere transferiert, werden. Insbesondere kann der Behälter mittels einer der Handhabungseinrichtungen in den Gefriertrockner eingesetzt und aus dem Gefriertrockner nach dem Gefriertrocknen wieder entnommen werden. Zum Befüllen des Gefriertrockners kann auch vorgesehen sein, dass ein oder mehrere Trays mit gefrierzutrocknenden Behältern bestückt werden und der Gefriertrockner damit beladen wird. Nach dem Gefriertrocknen können die Trays aus dem Gefriertrockner entladen werden und die gefriergetrockneten Behälter aus dem Tray entnommen werden. Der Gefriertrockner kann mit einer ganzen Charge bzw. Batch von Behältern bestückt werden. Der Gefriertrocknungsprozess läuft über mehrere Stunden bzw. Tage, bevor der Gefriertrockner wieder entladen wird.

In einer weiteren Ausgestaltung ist das Gefriertrocknungsmodul stromabwärts von dem Füllmodul angeordnet, insbesondere wobei das Gefriertrocknungsmodul zwischen dem Füllmodul und dem Bördelmodul angeordnet ist.

Auf diese Weise kann der Inhalt des Behälters nach dem Füllen gefriergetrocknet werden. Dazu kann der Behälter nach dem Füllen und Stopfensetzen an das Gefriertrocknungsmodul zum Gefriertrocknen übergeben werden. Nach dem Gefriertrocknen kann der Behälter dann an das Bördelmodul zum Verschließen übergeben werden.

In einer weiteren Ausgestaltung ist die zweite Übergabestation zwischen dem Füllmodul und dem Gefriertrocknungsmodul angeordnet.

Auf diese Weise kann der Behälter in dem Füllmodul gefüllt werden und direkt an das Gefriertrocknungsmodul zum Gefriertrocknen übergeben werden.

In einer weiteren Ausgestaltung weist das Isolatorsystem des Weiteren zwischen dem Bördelmodul und dem Gefriertrocknungsmodul eine dritte Übergabestation zum Übergeben des Behälters zwischen dem Bördelmodul und dem Gefriertrocknungsmodul auf.

Wenn das Bördelmodul stromabwärts von dem Gefriertrocknungsmodul angeordnet ist, kann der Behälter nach dem Gefriertrocknen in dem Gefriertrocknungsmodul über die dritte Übergabestation direkt an das Bördelmodul zum Verschließen übergeben werden. Wenn das Bördelmodul stromaufwärts von dem Gefriertrocknungsmodul angeordnet ist, kann der Behälter nach dem Verschließen in dem Bördelmodul über die dritte Übergabestation direkt an das Gefriertrocknungsmodul zum Gefriertrocknen übergeben werden.

In einer weiteren Ausgestaltung weist das Isolatorsystem des Weiteren ein Transfermodul zum Transferieren des Behälters zwischen dem Füllmodul, dem Bördelmodul und dem Gefriertrocknungsmodul auf.

Mittels des Transfermoduls kann der Behälter nach dem Füllen entweder von dem Füllmodul zu dem Bördelmodul transferiert oder von dem Füllmodul zu dem Gefriertrocknungsmodul transferiert werden, je nach dem ob ein Gefriertrocknen des Behälters erfolgen soll. Wird der Behälter in dem Gefriertrocknungsmodul gefriergetrocknet, wird der Behälter nach dem Gefriertrocknen mittels des Transfermoduls von dem Gefriertrocknungsmodul zu dem Bördelmodul transferiert. Das Transfermodul kann eine oder mehrere Handhabungseinrichtungen zum Handhaben bzw. Transferieren des Behälters innerhalb des Transfermoduls aufweisen.

In einer weiteren Ausgestaltung ist das Transfermodul zwischen dem Füllmodul, dem Bördelmodul und dem Gefriertrocknungsmodul angeordnet.

Auf diese Weise kann der Behälter wahlweise von dem Füllmodul direkt zu dem Bördelmodul oder als Zwischenstation zu dem Gefriertrocknungsmodul zum Gefriertrocknen transferiert werden, wonach der Behälter ebenfalls weiter zu dem Bördelmodul transferiert wird.

In einer weiteren Ausgestaltung ist die zweite Übergabestation zwischen dem Füllmodul und dem Transfermodul angeordnet.

Auf diese Weise kann der Behälter in dem Füllmodul gefüllt werden und direkt an das Transfermodul zum wahlweisen Transfer an das Bördelmodul oder Gefriertrocknungsmodul übergeben werden.

In einer weiteren Ausgestaltung weist das Isolatorsystem des Weiteren zwischen dem Transfermodul und dem Bördelmodul eine vierte Übergabestation zum Übergeben des Behälters zwischen dem Transfermodul und dem Bördelmodul auf, und wobei das Isolatorsystem des Weiteren zwischen dem Transfermodul und dem Gefriertrocknungsmodul eine fünfte Übergabestation zum Schleusen des Behälters zwischen dem Transfermodul und dem Gefriertrocknungsmodul aufweist.

Mittels der vierten Übergabestation kann der Behälter nach dem Befüllen in dem Füllmodul oder nach dem Gefriertrocknen in dem Gefriertrocknungsmodul von dem Transfermodul direkt an das Bördelmodul übergeben werden. Mittels der fünften Übergabestation kann der Behälter nach dem Befüllen in dem Füllmodul von dem Transfermodul direkt an das Gefriertrocknungsmodul übergeben werden.

In einer weiteren Ausgestaltung weist das Isolatorsystem des Weiteren ein Außenwaschmodul zum Außenwaschen des Behälters auf.

Unter Außenwaschen eines Behälters ist zu verstehen, dass die Außenseite des Behälters von Verunreinigungen, insbesondere Keime, Flüssigkeitsrückstände und/oder Pulverrückstände, befreit wird, die während des Füllens und/oder des Gefriertrocknens und/oder des Verschließens des Behälters aufgetreten sind. Zum Außenwaschen kann der Behälter beispielweise mit einer sterilen Flüssigkeit, insbesondere mit sterilem Wasser, abgespült werden und/oder mit einem inerten Gas oder steriler Luft abgeblasen werden, um die Verunreinigungen zu beseitigen. Beispielsweise kann die Außenwaschstation eine Anordnung von Düsen aufweisen, aus denen steriles Wasser zum Abreinigen und Sterilluft zum Trocknen austritt. Vorzugsweise sind dem sterilen Wasser Reinigungsmittel, beispielsweise Natronlauge, beigemischt.

In einer weiteren Ausgestaltung ist das Außenwaschmodul stromabwärts von dem Bördelmodul angeordnet.

Nach dem Verschließen des Behälters wird der Behälter somit in dem Außenwaschmodul außengewaschen, um möglicherweise aufgetretene Verunreinigungen zu beseitigen.

In einer weiteren Ausgestaltung weist das Isolatorsystem des Weiteren zwischen dem Bördelmodul und dem Außenwaschmodul eine sechste Übergabestation zum Übergeben des Behälters zwischen dem Bördelmodul und dem Außenwaschmodul auf.

Auf diese Weise kann der Behälter in dem Bördelmodul verschlossen werden und direkt an das Außenwaschmodul zum Außenwaschen übergeben werden.

In einer weiteren Ausgestaltung weist das Isolatorsystem eine Transportvorrichtung auf, die dazu ausgebildet ist, nach dem Außenwaschen den Behälter abzuführen.

Der Abtransport der Behälter kann unterschiedlich ausgestaltet sein. Beispielsweise kann der Behälter in ein Magazin außerhalb des Isolators ausgeschoben werden. Des Weiteren kann der Behälter auf ein Transportband mit entsprechendem Abtransport aus dem Isolator heraus abgesetzt werden. Des Weiteren kann der Behälter in eine Transportschnecke mit entsprechendem Abtransport aus dem Isolator heraus abgesetzt werden. Des Weiteren kann eine Einheit vorgesehen sein, mittels der der Behälter in ein Nest eingesetzt wird, das mit entsprechendem Abtransport aus dem Isolator heraus transportiert wird.

In einer weiteren Ausgestaltung ist das Isolatorsystem derart ausgebildet, dass der Behälter nach dem Füllen und Stopfensetzen in dem Füllmodul oder nach dem Verschließen in dem Bördelmodul oder nach dem Außenwaschen in dem Außenwaschmodul durch die einzelnen Module zurück in das Entnahmemodul transferiert wird, wobei das Entnahmemodul dazu ausgebildet ist den Behälter zurück in das Nest zu setzen, aus dem er entnommen wurde.

Vorzugsweise sind dazu die Handhabungseinrichtungen der einzelnen Module dazu ausgebildet, den Behälter von dem Füllmodul oder von dem Bördelmodul oder von dem Außenwaschmodul zurück in das Entnahmemodul zu transferieren. Auf diese Weise können beispielsweise Behälter gleichzeitig gefüllt, verschlossen oder außengewaschen werden, während fertig verarbeitete, insbesondere gefüllte, verschlossene, oder außengewaschene, Behälter im Gegenstrom zurück in Richtung des Entnahmemoduls transferiert werden. Insbesondere sind die einzelnen Übergabestationen dazu ausgebildet, dass sie, insbesondere gleichzeitig, einen Transfer in beide Richtungen zwischen den jeweiligen angrenzenden Modulen ermöglichen. Beispielsweise können die Handhabungseinrichtungen derart gesteuert sein, dass sie auf dem Hinweg zu einer Übergabestation einen noch fertig zu bearbeitenden Behälter zu der Übergabestation transferieren und auf dem Rückweg von der Übergabestation einen fertig bearbeiteten Behälter entnehmen und zurücktransferieren. Das gleichzeitige Transferieren der Behälter in beide Richtungen kann als Gegenstromprinzip bezeichnet werden. Nach dem Zurücksetzen in das Nest kann das Nest wieder zurück in eine Transportwanne gesetzt werden, die dann mittels der Transferschleuse oder einen weiteren Auslass aus dem Isolator herausgeführt wird. Das Gegenstromprinzip beeinträchtigt den Durchsatz an Behältern in der Hinrichtung nicht oder nur unwesentlich, da die Handhabungseinrichtungen mit oder ohne bearbeiteten Behälter den Rückweg abfahren. Mittels dieses Gegenstromprinzips können die Behälter daher auf einfache Art und Wiese ohne Notwendigkeit weiterer Transporteinrichtungen in das Nest zurückgeführt und mit diesem ausgeschleust werden.

In einer weiteren Ausgestaltung ist zwischen aufeinanderfolgenden Modulen des Isolatorsystems jeweils eine Trennwand angeordnet.

Die einzelnen Module sind durch die Trennwände voneinander separiert. Die Druckverhältnisse in den einzelnen Modulen können unterschiedlich sein. Insbesondere kann der Druck in dem Füllmodul höher sein als in den restlichen Modulen. Vorzugsweise herrscht in jedem Modul ein Überdruck. Die Trennwände ermöglichen, dass in jedem Modul ein individueller Druck eingestellt werden kann. In speziellen Anwendungen, beispielsweise bei der Verarbeitung von toxischen Produkten, kann vorgesehen sein, dass der Druck in dem Füllmodul niedriger ist als in den restlichen Modulen.

In einer weiteren Ausgestaltung ist in jeder Trennwand die jeweilige Übergabestation zum Übergeben des Behälters zwischen den entsprechenden Modulen angeordnet.

Eine Übergabe von Behältern zwischen den Modulen ist somit nur über die Übergabestationen möglich. Jede Übergabestation bildet somit einen Übergang zwischen den durch die jeweilige Trennwand voneinander getrennten Modulen.

In einer weiteren Ausgestaltung weist jedes Modul des Isolatorsystems mindestens zwei Handhabungseinrichtungen zum Handhaben des Behälters in dem entsprechenden Modul auf.

Mittels zweier Handhabungseinrichtungen können die Steuerungsschritte in jedem Modul schneller ausgeführt werden, da die jeweiligen Verfahrensschritte auf die zwei Handhabungseinrichtungen aufgeteilt werden können. Auf diese Weise können einzelne Verfahrensschritte beim Handhaben mehrerer Behälter gleichzeitig durchgeführt werden, wodurch die Durchsatzrate erhöht, insbesondere verdoppelt, wird.

In einer weiteren Ausgestaltung weist das Isolatorsystem des Weiteren eine Dekontaminationseinrichtung zum Dekontaminieren mindestens eines Moduls des Isolatorsystems auf, wobei mindestens ein Modul ausgewählt aus einer Liste umfassend das Füllmodul, das Entnahmemodul, das Bördelmodul, das Gefriertrocknungsmodul, das Transfermodul und das Außenwaschmodul mit der Dekontaminationseinrichtung koppelbar ist, um zumindest das Modul zu dekontaminieren.

Die Dekontaminationseinrichtung kann beispielsweise zum Dekontaminieren das gekoppelte Modul mit Wasserstoffperoxid (H2O2) begasen. Auf diese Weise wird das entsprechende Modul dekontaminiert. Sind mehrere Module miteinander verbunden und nicht voneinander isoliert, können diese Module gleichzeitig dekontaminiert werden, beispielsweise durch gemeinsames Begasen mit Wasserstoffperoxid. Das Isolatorsystem kann eine Lüftungseinrichtung aufweisen, mittels der die definierte Atmosphäre in dem Isolator erzeugt wird. Die Lüftungseinrichtung ist mit jedem Modul des Isolatorsystems gekoppelt. Die Dekontaminationseinrichtung kann über die Lüftungseinrichtung mit den Modulen des Isolatorsystems gekoppelt werden, um alle Module gleichzeitig oder nur gezielt einzelne Module mit H2O2 zu begasen, um diese Module zu kontaminieren. Bei der initialen Dekontamination zu Produktionsbeginn und/oder bei einem Produktionsende wird der komplette Raum über alle Module hinweg dekontaminiert.

In einer weiteren Ausgestaltung ist jede Übergabestation verschließbar, um die jeweiligen benachbarten Module voneinander zu isolieren.

Auf diese Weise kann die Übergabestation während des Dekontaminierens verschlossen werden, um dabei ein zu dekontaminierendes Modul von den benachbarten Modulen zu isolieren. Dadurch wird es möglich, ein einzelnes Modul gezielt zu dekontaminieren, was deutlich schneller geht als das Dekontaminieren des kompletten Isolatorsystems. Dies ist insbesondere dann von Vorteil, wenn nur in einem bestimmten Modul eine Kontamination auftritt und nur dieses Modul dekontaminiert werden muss. Die Kontamination eines einzelnen Moduls kann dann erforderlich sein, wenn es zu einer Störung in dem Bearbeitungsprozess des Behälters kommt. Um die Störung manuell zu beheben, kann es erforderlich sein, eine Isolatortür zu dem entsprechenden Modul zu Öffnen.Durch dieses Öffnen wird der Innenraum des Isolators unsteril. Wenn das entsprechende Modul gegenüber den anderen Modulen isoliert ist, wird beim Öffnen der Isolatortür nur das entsprechende Modul unsteril, so dass nur eine Dekontamination des einzelnen Moduls erforderlich ist, die dann nur einen kurzen Zeitraum beansprucht.

In einer weiteren Ausgestaltung weist jede Übergabestation mindestens eine Aufnahme zum Aufnehmen des Behälters auf.

Zum Übergeben eines Behälters zwischen zwei Modulen kann der Behälter mittels einer Handhabungseinrichtung des übergebenden Moduls in die Aufnahme der Übergabestation eingebracht werden und mittels einer weiteren Handhabungseinrichtung des entgegennehmenden Moduls aus der Aufnahme wieder entnommen werden. Auf diese Weise wird eine einfache Übergabe zwischen Modulen ermöglicht.

In einer weiteren Ausgestaltung ist die Aufnahme in einer Transferrichtung zwischen den angrenzenden Modulen zu den angrenzenden Modulen hin geöffnet, so dass der Behälter in der Transferrichtung in die Aufnahme mittels einer Handhabungseinrichtung einbringbar und in der Transferrichtung aus der Aufnahme mittels einer Handhabungseinrichtung entnehmbar ist.

Auf diese Weise kann der Behälter direkt in der Transferrichtung in die Aufnahme eingesetzt bzw. aus dieser wieder entnommen werden, ohne dass eine Bewegung senkrecht zu der Transferrichtung erforderlich ist. Dadurch kann der Behälter einfach zwischen zwei Modulen übergeben werden, wodurch die Handhabung vereinfacht wird und die Durchsatzrate erhöht wird.

In einer weiteren Ausgestaltung weist jede Übergabestation eine Haltevorrichtung auf, die dazu ausgebildet sind, den Behälter in der jeweiligen Aufnahme zu halten.

Ist der Behälter in der Aufnahme angeordnet, wird der Behälter mittels der Haltevorrichtung gehalten. Der Behälter wird dabei derart gehalten, dass der Behälter in der Transferrichtung eingesetzt bzw. entnommen werden kann.

In einer weiteren Ausgestaltung ist jede Handhabungseinrichtung der Mehrzahl von Handhabungseinrichtung des Füllmoduls derart ausgebildet, dass sie mindestens zwei Behälter gleichzeitig handhaben kann, wobei die erste und die zweite Übergabestation derart ausgebildet sind, dass mindestens zwei Behälter gleichzeitig übergeben werden können, insbesondere wobei jede Übergabestation mindestens zwei Aufnahmen zum Aufnehmen jeweils eines Behälters aufweist.

Auf diese Weise können in dem Füllmodul zwei Behälter gleichzeitig gehandhabt werden. Insbesondere können die Füllstation und die Stopfensetzstation dazu ausgebildet sein, dass zwei Behälter gleichzeitig gefüllt bzw. mit einem Stopfen versehen werden können. Auf diese Weise wird die Durchsatzrate des Füllmoduls verdoppelt. Insbesondere kann jede Handhabungseinrichtung zwei Greifwerkzeuge aufweisen, mit denen zwei Behälter gleichzeitig gegriffen und transferiert werden können.

In einer weiteren Ausgestaltung ist jedes Modul derart ausgebildet, dass zwei Behälter gleichzeitig handhabbar sind.

Dazu kann jede Handhabungseinrichtung derart ausgebildet sein, dass sie zwei Behälter gleichzeitig handhaben kann. Insbesondere kann jede Handhabungseinrichtung zwei Greifwerkzeuge aufweisen, mit denen zwei Behälter gleichzeitig gegriffen und transferiert werden können. Des Weiteren kann jede Übergabestation mindestens zwei, vorzugsweise vier oder mehr, Aufnahmen zum Aufnehmen jeweils eines Behälters aufweisen. Des Weiteren kann jede Station der Module derart ausgebildet sein, dass sie zwei Behälter gleichzeitig handhaben kann. Beispielsweise können in der Entnahmestation zwei Behälter aus dem Nest entnommen werden, in der Füllstation zwei Behälter gefüllt werden, in der Stopfensetzstation zwei Stopfen auf zwei Behälter gesetzt werden, in der Bördelstation zwei Behälter mit einem Deckel verschlossen werden, in dem Gefriertrockner zwei Behälter eingesetzt bzw. entnommen werden und in dem Außenwaschmodul zwei Behälter außengewaschen werden.

In einer weiteren Ausgestaltung weist die Füllstation eine Füllnadel zum Abgeben der Flüssigkeit auf, wobei in dem Schritt des Füllens der Behälter mittels der Füllnadel gefüllt wird.

In anderen Worten gibt die Füllnadel beim Füllen die Flüssigkeit in den Behälter ab. Die Füllnadel kann dazu in dem Behälter oder oberhalb einer Öffnung des Behälters angeordnet sein.

In einer weiteren Ausgestaltung wird die Füllnadel zum Füllen durch eine Öffnung des Behälters in den Behälter eingeführt.

Dadurch ist die Füllnadel beim Füllen in dem Behälter angeordnet. Auf diese Weise kann der Behälter schneller bei gleichzeitig geringerer Blasenbildung gefüllt werden.

In einer weiteren Ausgestaltung ist die Steuerungseinrichtung dazu eingerichtet, die erste Handhabungseinrichtung derart zu steuern, dass der folgende Schritt ausgeführt wird:
- Bewegen des Behälters relativ zu der Füllnadel mittels der ersten Handhabungseinrichtung, während der Behälter gefüllt wird.

Auf diese Weise kann beim Füllen Blasenbildung vermieden werden ohne dass eine zusätzliche Mechanik erforderlich ist um eine entsprechende Relativbewegung auszuführen. Dadurch wird die Handhabung während des Füllprozesses verbessert und die Durchsatzrate erhöht.

In einer weiteren Ausgestaltung ist zu Beginn des Füllens eine Spitze der Füllnadel am dem Boden des Behälters angeordnet, und wobei im Schritt des Bewegens der Behälter derart bewegt wird, dass die Spitze der Füllnadel vom Boden in Richtung der Öffnung des Behälters versetzt wird.

Auf diese Weise kann die Spitze der Füllnadel während des Füllvorgangs an der Oberfläche der Flüssigkeit in dem Behälter gehalten werden, wodurch Blasenbildung vermieden werden kann.

In einer weiteren Ausgestaltung weist die Füllstation eine Wiegeeinrichtung zum Wiegen des Behälters auf.

Mittels der Wiegeeinrichtung kann die Füllmenge der Flüssigkeit im Behälter kontrolliert werden.

In einer weiteren Ausgestaltung ist die Steuerungseinrichtung dazu eingerichtet, die erste Handhabungseinrichtung derart zu steuern, dass die erste Handhabungseinrichtung den Behälter vor dem Füllen und/oder nach dem Füllen auf die Wiegeeinrichtung zum Wiegen abstellt.

Auf diese Weise kann die in den Behälter abgegebene Flüssigkeitsmenge aus der Differenz des ermittelten Gewichts vor und nach dem Füllen sowie der Dichte der Flüssigkeit bestimmt werden und zur Kontrolle mit einem Sollwert verglichen werden.

In einer weiteren Ausgestaltung ist die Wiegeeinrichtung unterhalb der Füllnadel angeordnet.

Auf diese Weise erfolgt das Wiegen vor und/oder nach dem Füllen direkt unterhalb der Füllnadel. Der Behälter kann daher entweder beim Füllen auf der Wiegeeinrichtung stehen bleiben oder wird mittels der ersten Handhabungseinrichtung lediglich relativ zu der Füllnadel bewegt. Auf diese Weise werden der Aufbau und die Handhabung vereinfacht. Zudem muss der Behälter dadurch nicht zu einer im Raum separierten Wiegeeinrichtung transferiert werden, wodurch auch die Durchsatzrate erhöht wird.

In einer weiteren Ausgestaltung weist die Füllstation eine Wiegeeinrichtung zum Wiegen des Behälters auf, wobei das Verfahren des Weiteren die folgenden Schritte aufweist:
- erstes Wiegen des Behälters vor dem Füllen des Behälters mittels der Wiegeeinrichtung; und/oder
- zweites Wiegen des Behälters nach dem Füllen des Behälters mittels der Wiegeeinrichtung.

Auf diese Weise kann die in den Behälter abgegebene Flüssigkeitsmenge aus der Differenz des ermittelten Gewichts vor und nach dem Füllen sowie der Dichte der Flüssigkeit bestimmt werden und zur Kontrolle mit einem Sollwert verglichen werden.

In einer weiteren Ausgestaltung wird der Behälter vor dem Füllen und/oder nach dem Füllen mittels der ersten Handhabungseinrichtung auf die Wiegeeinrichtung zum Wiegen abgestellt.

Wie zuvor bereits ausgeführt, kann hierdurch die in den Behälter abgegebene Flüssigkeitsmenge bestimmt werden und zur Kontrolle mit einem Sollwert verglichen werden.

In einer weiteren Ausgestaltung weist das Füllmodul des Weiteren eine Stopfensetzstation zum Aufsetzen eines Stopfens auf den gefüllten Behälter auf.

In anderen Worten ist die Stopfensetzstation dazu ausgebildet, einen Stopfen in die Öffnung des Behälters einzusetzen. Der Stopfen verschließt die Öffnung des Behälters.

In einer weiteren Ausgestaltung weist das Verfahren des Weiteren die folgenden Schritte auf:
- zweites Transferieren des Behälters von der Füllstation zu einer Stopfensetzstation des Füllmoduls mittels der ersten Handhabungseinrichtung und/oder einer zweiten Handhabungseinrichtung; und
- Aufsetzen eines Stopfens auf den Behälter in der Stopfensetzstation.

Auf diese Weise kann nach dem Befüllen des Behälters ein Stopfen auf den Behälter gesetzt werden, um zu verhindern, dass bei der weiteren Verarbeitung des Behälters Flüssigkeit und/oder Gas aus dem Behälter wieder austreten kann.

In einer weiteren Ausgestaltung weist das Verfahren des Weiteren den folgenden Schritt auf:
- drittes Transferieren des Behälters von der Stopfensetzstation zu einer zweiten Übergabestation zum Übergeben des Behälters aus dem Füllmodul mittels der zweiten Handhabungseinrichtung.

Auf diese Weise werden zwei Handhabungseinrichtungen verwendet, um den Behälter innerhalb des Füllmoduls zu transferieren. Dadurch wird die Durchsatzrate in dem Füllmodul erhöht.

In einer weiteren Ausgestaltung weist das Verfahren des Weiteren den folgenden Schritt auf:
- Entnehmen des zu füllenden Behälters aus einem Nest mittels eines Entnahmemoduls.

Eine Mehrzahl von zu füllenden Behältern wird in einem Nest bereitgestellt. Das Nest kann in einer Transportwanne (Tub) über eine Transferschleuse in den Isolator eingeführt werden. Die Transferschleuse stellt einen Anlageneingang dar. Die Transferschleuse kann als H2O2-Schleuse ausgebildet sein. Neben einer H2O2-Schleuse gibt es noch weitere Möglichkeiten, wie die Transportwanne in das Entnahmemodul gelangen kann. Beispielsweise können Dekontaminationskammern mit den Verfahren Elektronenstrahl, Plasmastrahl, Gammastrahl oder Stickstoffdioxid eingesetzt sein. Es kann auch ohne Sterilisationsverfahren gearbeitet werden, indem die Transportwannen nach dem Aufschneiden des Außenbeutels direkt in das Entnahmemodul geschoben bzw. transferiert werden. Die Transportwanne kann manuell oder maschinell in die Transferschleuse eingangsseitig eingelegt werden, nachdem insbesondere ein Außenbeutel um diese herum aufgeschnitten worden ist. Es kann es Weiteren ein Öffnen der Transportwanne, eine Entfernen des geöffneten Außenbeutels und/oder eines Innenbeutels und/oder ein Herausheben des Nests aus der Transportwanne erfolgen. Bei geschlossener Schleuse wird die Transportwanne dann, gegebenenfalls mit Nest, über Wasserstoffperoxid (H2O2) oder eines der anderen obigen Verfahren dekontaminert. Anschließend wird der Zugang zu dem Entnahmemodul geöffnet und die Verarbeitung beginnt. Das Entnahmemodul kann eine Entnahmestation und eine Handhabungseinrichtung aufweisen. In der Entnahmestation kann das Nest gehalten werden oder abgestellt sein, während die Handhabungseinrichtung jeden Behälter einzeln aus dem Nest entnimmt, zu der ersten Übergabestation transferiert und darin zum Übergeben an das Füllmodul anordnet. Die Handhabungseinrichtung kann auch derart ausgebildet sein, dass sie mehrere, insbesondere zwei, Behälter gleichzeitig aus dem Nest entnehmen und in der Übergabestation anordnen kann.

In einer weiteren Ausgestaltung weist das Verfahren des Weiteren den folgenden Schritt auf:
- Verschließen des gefüllten Behälters mittels eines Bördelmoduls.

Das Bördelmodul kann eine Bördelstation und eine oder mehrere Handhabungseinrichtungen zum Handhaben des gefüllten Behälters aufweisen. In der Bördelstation wird der Behälter mittels eines Deckels, insbesondere einer Aluminiumkappe, verschlossen. Dazu wird der Deckel in der Bördelstation auf die Öffnung des Behälters aufgesetzt und auf dem oberen Rand des Behälters gebördelt. Dieser Vorgang wird daher auch als "Bördeln" bezeichnet. Die Bördelstation kann des Weiteren eine Zuführung aufweisen, über die Deckel zugeführt werden können. Die Bördelstation kann mit einem Deckelreservoir verbunden sein, in dem eine Mehrzahl von Deckeln gelagert ist. Das Deckelreservoir kann eine Vereinzelungseinrichtung aufweisen, in der die Deckel vereinzelt werden, bevor diese über die Zuführung der Bördelstation vereinzelt zugeführt werden. Der gefüllte Behälter kann von der zweiten Transferschleuse zu der Bördelstation mittels einer oder mehrerer der Handhabungseinrichtungen transferiert werden. Alternativ kann die Zuführung über eine lose Bereitstellung der Deckel auf einer Platte erfolgen. Die Lage der Deckel kann über eine Sensoreinrichtung, beispielsweise ein Kamera, erkannt werden. Die Bördelstation kann einen Roboter aufweisen, der anhand der erkannten Lage einen Deckel aufgreift und der Bördelstation zuführt oder direkt auf die Öffnung des Behälters aufsetzt. Des Weiteren kann die Bördelstation derart ausgebildet sein, dass mehrere, insbesondere zwei, Behälter gleichzeitig verschlossen werden können.

In einer weiteren Ausgestaltung weist das Verfahren des Weiteren den folgenden Schritt auf:
- Gefriertrocknen des gefüllten Behälters mittels eines Gefriertrocknungsmoduls.

Das Gefriertrocknungsmodul kann dazu einen Gefriertrockner aufweisen, in dem der Behälter gefriergetrocknet werden kann. Alternativ kann der Gefriertrockner auch außerhalb des Isolators angeordnet sein, wobei der Gefriertrockner mit dem Isolator, insbesondere mit dem Gefriertrocknungsmodul koppelbar ist. Das Gefriertrocknungsmodul kann des Weiteren eine oder mehrere Handhabungseinrichtungen zum Handhaben des gefüllten Behälters aufweisen. Mittels der Handhabungseinrichtungen kann der Behälter innerhalb des Gefriertrocknungsmoduls gehandhabt, insbesondere transferiert, werden. Insbesondere kann der Behälter mittels einer der Handhabungseinrichtungen in den Gefriertrockner eingesetzt und aus dem Gefriertrockner nach dem Gefriertrocknen wieder entnommen werden. Zum Befüllen des Gefriertrockners kann auch vorgesehen sein, dass ein oder mehrere Trays mit gefrierzutrocknenden Behältern bestückt werden und der Gefriertrockner damit beladen wird. Nach dem Gefriertrocknen können die Trays aus dem Gefriertrockner entladen werden und die gefriergetrockneten Behälter aus dem Tray entnommen werden. Der Gefriertrockner kann mit einer ganzen Charge bzw. Batch von Behältern bestückt werden. Der Gefriertrocknungsprozess läuft über mehrere Stunden bzw. Tage, bevor der Gefriertrockner wieder entladen wird.

In einer weiteren Ausgestaltung weist das Verfahren des Weiteren den folgenden Schritt auf:
- Transferieren des gefüllten Behälters zwischen dem Füllmodul, dem Bördelmodul und dem Gefriertrocknungsmodul mittels eines Transfermoduls.

Mittels des Transfermoduls kann der Behälter nach dem Füllen entweder von dem Füllmodul zu dem Bördelmodul transferiert oder von dem Füllmodul zu dem Gefriertrocknungsmodul transferiert werden, je nach dem ob ein Gefriertrocknen des Behälters erfolgen soll. Wird der Behälter in dem Gefriertrocknungsmodul gefriergetrocknet, wird der Behälter nach dem Gefriertrocknen mittels des Transfermoduls von dem Gefriertrocknungsmodul zu dem Bördelmodul transferiert. Das Transfermodul kann eine oder mehrere Handhabungseinrichtungen zum Handhaben bzw. Transferieren des Behälters innerhalb des Transfermoduls aufweisen.

In einer weiteren Ausgestaltung weist das Verfahren des Weiteren den folgenden Schritt auf:
- Außenwaschen des verschlossenen Behälters mittels eines Außenwaschmoduls.

Unter Außenwaschen eines Behälters ist zu verstehen, dass die Außenseite des Behälters von Verunreinigungen, insbesondere Keime, Flüssigkeitsrückstände und/oder Pulverrückstände, befreit wird, die während des Füllens und/oder des Gefriertrocknens und/oder des Verschließens des Behälters aufgetreten sind. Zum Außenwaschen kann der Behälter beispielweise mit einer sterilen Flüssigkeit, insbesondere mit sterilem Wasser, abgespült werden und/oder mit einem inerten Gas oder steriler Luft abgeblasen werden, um die Verunreinigungen zu beseitigen. Beispielsweise kann die Außenwaschstation eine Anordnung von Düsen aufweisen, aus denen steriles Wasser zum Abreinigen und Sterilluft zum Trocknen austritt. Vorzugsweise sind dem sterilen Wasser Reinigungsmittel, insbesondere Natronlauge, beigemischt.

In einer weiteren Ausgestaltung weist das Verfahren des Weiteren den folgenden Schritt auf:
- Abführen des Behälters mittels einer Transportvorrichtung nach dem Außenwaschen.

Der Abtransport der Behälter kann unterschiedlich ausgestaltet sein. Beispielsweise kann der Behälter in ein Magazin außerhalb des Isolators ausgeschoben werden. Des Weiteren kann der Behälter auf ein Transportband mit entsprechendem Abtransport aus dem Isolator heraus abgesetzt werden. Des Weiteren kann der Behälter in eine Transportschnecke mit entsprechendem Abtransport aus dem Isolator heraus abgesetzt werden. Des Weiteren kann eine Einheit vorgesehen sein, mittels der der Behälter in ein Nest eingesetzt wird, das mit entsprechendem Abtransport aus dem Isolator heraus transportiert wird.

In einer weiteren Ausgestaltung weist das Verfahren des Weiteren den folgenden Schritt auf:
- Rückführen des Behälters in das Nest, aus dem er entnommen wurde, insbesondere wobei der Behälter nach dem Füllen und Stopfensetzen in dem Füllmodul oder nach dem Verschließen in dem Bördelmodul oder nach dem Außenwaschen in dem Außenwaschmodul durch die einzelnen Module zurück in das Entnahmemodul transferiert wird, wobei das Entnahmemodul dazu ausgebildet ist den Behälter zurück in das Nest zu setzen, aus dem er entnommen wurde.

Vorzugsweise sind dazu die Handhabungseinrichtungen der einzelnen Module dazu ausgebildet, den Behälter von dem Füllmodul oder von dem Bördelmodul oder von dem Außenwaschmodul zurück in das Entnahmemodul zu transferieren. Auf diese Weise können beispielsweise Behälter gleichzeitig gefüllt, verschlossen oder außengewaschen werden, während fertig verarbeitete, insbesondere gefüllte, verschlossene, oder außengewaschene, Behälter im Gegenstrom zurück in Richtung des Entnahmemoduls transferiert werden. Insbesondere sind die einzelnen Übergabestationen dazu ausgebildet, dass sie, insbesondere gleichzeitig, einen Transfer in beide Richtungen zwischen den jeweiligen angrenzenden Modulen ermöglichen. Beispielsweise können die Handhabungseinrichtungen derart gesteuert sein, dass sie auf dem Hinweg zu einer Übergabestation einen noch fertig zu bearbeitenden Behälter zu der Übergabestation transferieren und auf dem Rückweg von der Übergabestation einen fertig bearbeiteten Behälter entnehmen und zurücktransferieren. Das gleichzeitige Transferieren der Behälter in beide Richtungen kann als Gegenstromprinzip bezeichnet werden. Nach dem Zurücksetzen in das Nest kann das Nest wieder zurück in eine Transportwanne gesetzt werden, die dann mittels der Transferschleuse aus dem Isolator herausgeführt wird. Das Gegenstromprinzip beeinträchtigt den Durchsatz an Behältern in der Hinrichtung nicht oder nur unwesentlich, da die Handhabungseinrichtungen mit oder ohne bearbeiteten Behälter den Rückweg abfahren. Mittels dieses Gegenstromprinzips können die Behälter daher auf einfache Art und Wiese ohne Notwendigkeit weiterer Transporteinrichtungen in das Nest zurückgeführt und mit diesem ausgeschleust werden.

In einer weiteren Ausgestaltung weist das Verfahren des Weiteren die folgenden Schritte auf:
- Koppeln mindestens eines Moduls ausgewählt aus einer Liste umfassend das Füllmodul, das Entnahmemodul, das Bördelmodul, das Gefriertrocknungsmodul, das Transfermodul und das Außenwaschmodul mit einer Dekontaminationseinrichtung;
- Dekontaminieren des Moduls mittels der Dekontaminationseinrichtung.

Die Dekontaminationseinrichtung kann beispielsweise zum Dekontaminieren das gekoppelte Modul mit Wasserstoffperoxid (H2O2) begasen. Auf diese Weise wird das entsprechende Modul dekontaminiert. Sind mehrere Module miteinander verbunden und nicht voneinander isoliert, können diese Module gleichzeitig dekontaminiert werden, beispielsweise durch gemeinsames Begasen mit Wasserstoffperoxid. Das Isolatorsystem kann eine Lüftungseinrichtung aufweisen, mittels der die definierte Atmosphäre in dem Isolator erzeugt wird. Die Lüftungseinrichtung ist mit jedem Modul des Isolatorsystems gekoppelt. Die Dekontaminationseinrichtung kann über die Lüftungseinrichtung mit den Modulen des Isolatorsystems gekoppelt werden, um alle Module gleichzeitig oder nur gezielt einzelne Module mit H2O2 zu begasen, um diese Module zu kontaminieren. Bei der initialen Dekontamination zu Produktionsbeginn wird der komplette Raum über alle Module hinweg dekontaminiert.

In einer weiteren Ausgestaltung weist das Verfahren des Weiteren den folgenden Schritt auf:
- Verschließen jeder Übergabestation zu dem Modul, um das Modul von benachbarten Modulen zu isolieren.

Auf diese Weise kann die Übergabestation während des Dekontaminierens verschlossen werden, um dabei ein zu dekontaminierendes Modul von den benachbarten Modulen zu isolieren. Dadurch wird es möglich, ein einzelnes Modul gezielt zu dekontaminieren, was deutlich schneller geht als das Dekontaminieren des kompletten Isolatorsystems. Dies ist insbesondere dann von Vorteil, wenn nur in einem bestimmten Modul eine Kontamination auftritt und nur dieses Modul dekontaminiert werden muss. Die Kontamination eines einzelnen Moduls kann dann erforderlich sein, wenn es zu einer Störung in dem Bearbeitungsprozess des Behälters kommt. Um die Störung manuell zu beheben, kann es erforderlich sein, eine Isolatortür zu dem entsprechenden Modul zu Öffnen.Durch dieses Öffnen wird der Innenraum des Isolators unsteril. Wenn das entsprechende Modul gegenüber den anderen Modulen isoliert ist, wird beim Öffnen der Isolatortür nur das entsprechende Modul unsteril, so dass nur eine Dekontamination des einzelnen Moduls erforderlich ist, die dann nur einen kurzen Zeitraum beansprucht.

In einer weiteren Ausgestaltung weist jede Übergabestation mindestens eine Aufnahme für den Behälter auf, wobei das Verfahren des Weiteren den Schritt aufweist:
- Entnehmen des zu füllenden Behälters aus der Aufnahme der ersten Übergabestation mittels der ersten Handhabungseinrichtung; und
- Einsetzen des befüllten Behälters in die Aufnahme der zweiten Übergabestation mittels der zweiten Handhabungseinrichtung.

Zum Übergeben eines Behälters zwischen zwei Modulen kann der Behälter mittels einer Handhabungseinrichtung des übergebenden Moduls in die Aufnahme der Übergabestation eingebracht bzw. eingesetzt werden und mittels einer weiteren Handhabungseinrichtung des entgegennehmenden Moduls aus der Aufnahme wieder entnommen werden. Auf diese Weise wird eine einfache Übergabe zwischen Modulen ermöglicht.

In einer weiteren Ausgestaltung ist die Aufnahme dazu ausgebildet, verschiedene Behälter mit unterschiedlicher Geometrie aufzunehmen, und wobei die Haltevorrichtung derart ausgebildet ist, dass sie die verschiedenen Behälter in der Aufnahme halten kann, insbesondere wobei die verschiedenen Behälter unterschiedliche Durchmesser aufweisen.

Auf diese Weise ist die Übergabestation dazu eingerichtet, dass verschiedene Behältertypen zwischen den Modulen übergeben werden können. Dadurch kann die Flexibilität der Anlage erhöht werden. Zudem kann auf verschiedene Formatteile verzichtet werden. Vorzugsweise sind die Behälter, wie beispielsweise Vials, Spritzen, Flaschen, Zylinderampullen, zylinderförmig ausgestaltet. In anderen Worten sind diese Behälter im Querschnitt kreiszylindrisch. Allerdings können die Durchmesser der Behälter verschieden sein. Die Haltevorrichtung kann derart variable oder flexibel ausgestaltet sein, dass sie sich an den Durchmesser der Behälter anpassen kann.

In einer weiteren Ausgestaltung weist die Haltevorrichtung elastische Elemente aufweist, die senkrecht zu der Transferrichtung gegenüberliegend an der Aufnahme angeordnet sind, wobei die elastische Elemente derart angeordnet sind, dass sie beim Anordnen eines Behälters zwischen den elastischen Elementen auseinandergedrückt werden.

In anderen Worten sind die elastischen Elemente so nah aneinander angeordnet, dass beim Einführen des Behälters in die Aufnahme der Behälter die elastischen Elemente auseinanderdrückt. Je nach Behälterdurchmesser werden die elastischen Elemente entsprechend weit auseinandergedrückt. Auf diese Weise wird beispielsweise erreicht, dass verschiedene Behälter mit unterschiedlicher Geometrie, insbesondere mit unterschiedlichem Durchmesser, mittels der Haltevorrichtung in der Aufnahme gehalten werden können. Die Klemmelemente, insbesondere die als Federelemente oder elastische Elemente ausgebildeten Klemmelemente, können ein Prisma bilden, in das sich die Objekte einfügen. Beim Einfedern verschieben sich die Prismakonturen so, dass der theoretische Mittelpunkt immer in der Mitte der Haltevorrichtung bleibt. Auf diese Weise können mittels der Klemmelemente Objekte mit unterschiedlichen Durchmessern auf der gleichen Position gehalten werden.

In einer weiteren Ausgestaltung weist die Haltevorrichtung eine Vorspanneinrichtung auf, die dazu ausgebildet ist, den Behälter quer, insbesondere senkrecht, zu der Transferrichtung zu klemmen.

In anderen Worten wird der Behälter in der Aufnahme senkrecht zu der Transferrichtung geklemmt, wenn der Behälter in die Aufnahme eingebracht worden ist. Das Einbringen und Entnehmen des Behälters erfolgt aber in der Transferrichtung, so dass das Klemmen des Behälters das Einbringen und Entnehmen des Behälters nicht behindert. Insbesondere können die elastischen Elemente dazu ausgebildet sein, wenn sie senkrecht zur Transferrichtung auseinandergedrückt werden, eine Vorspannkraft aufzubauen.

In einer weiteren Ausgestaltung ist die Übergabestation dazu ausgebildet, eine Mehrzahl von Behältern aufzunehmen, und wobei die Übergabestation eine Mehrzahl von Aufnahmen zum Aufnehmen jeweils eines Behälters aufweist.

Auf diese Weise können mehrere Behälter gleichzeitig mittels der Übergabestation übergeben werden.

In einer weiteren Ausgestaltung ist die Anzahl der Mehrzahl von Aufnahmen geradzahlig, insbesondere zwei, vier oder sechs.

Mittels einer geradzahlige Anzahl von Aufnahmen können gleich viele Behälter von beiden Seiten der Übergabestation gehandhabt werden. Beispielsweise kann das zweite Modul Behälter aus der Hälfte der Aufnahmen entnehmen, während das erste Modul Behälter in die andere Hälfte der Aufnahme einsetzt. Alternativ könnten auch in beide Richtungen, sprich vom ersten zum zweiten Modul und vom zweiten zum ersten Modul jeweils gleich viele Behälter in jeweils einer Hälfte der Aufnahmen übergeben werden.

In einer weiteren Ausgestaltung ist die Übergabestation verschließbar, um die Module voneinander zu isolieren.

Auf diese Weise kann die Übergabestation während eines Dekontaminationszyklus verschlossen werden, um dabei ein zu dekontaminierendes Modul von den benachbarten Modulen zu isolieren. Dadurch wird es möglich, ein einzelnes Modul gezielt zu dekontaminieren, was deutlich schneller geht als das Dekontaminieren des kompletten Isolatorsystems. Dies ist insbesondere dann von Vorteil, wenn nur in einem bestimmten Modul eine Kontamination auftritt und nur dieses Modul dekontaminiert werden muss.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
Fig. 1 eine schematische Darstellung einer ersten Ausführungsform eines Isolatorsystems;
Fig. 2 eine schematische Darstellung einer zweiten Ausführungsform eines Isolatorsystems;
Fig. 3 eine schematische Darstellung einer dritten Ausführungsform eines Isolatorsystems;
Fig. 4 eine isometrische Ansicht einer Ausführungsform eines Entnahmemoduls;
Fig. 5 eine isometrische Ansicht einer Entnahmestation des Entnahmemoduls aus Fig. 4;
Fig. 6 eine isometrische Ansicht einer Ausführungsform eines Füllmoduls;
Fig. 7 eine isometrische Ansicht einer Füllstation des Füllmoduls aus Fig. 6;
Fig. 8 eine isometrische Ansicht einer Stopfensetzstation des Füllmoduls aus Fig. 6;
Fig. 9 eine isometrische Ansicht einer Ausführungsform eines Bördelmoduls;
Fig. 10 eine isometrische Ansicht einer Bördelstation des Bördelmoduls aus Fig. 9;
Fig. 11 eine isometrische Ansicht einer Ausführungsform einer Übergabestation zum Übergeben von Behältern;
Fig. 12A eine Frontalansicht auf die Übergabestation aus Fig. 11;
Fig. 12B eine vergrößerte Teilansicht der Klemmelemente in der Draufsicht;
Fig. 13 eine isometrische Ansicht der Übergabestation aus Fig. 11 mit darin angeordneten Spritzen;
Fig. 14 eine Frontalansicht auf die Übergabestation aus Fig. 13;
Fig. 15 eine isometrische Ansicht der Übergabestation aus Fig. 11 mit darin angeordneter Petrischale;
Fig. 16 eine schematische Darstellung einer ersten Ausführungsform eines Verfahrens zum Füllen eines Behälters;
Fig. 17 eine schematische Darstellung einer zweiten Ausführungsform eines Verfahrens zum Füllen eines Behälters;
Fig. 18 eine schematische Darstellung einer dritten Ausführungsform eines Verfahrens zum Füllen eines Behälters; und
Fig. 19 eine schematische Darstellung einer ersten Ausführungsform eines Verfahrens zum Übergeben eines Behälters.

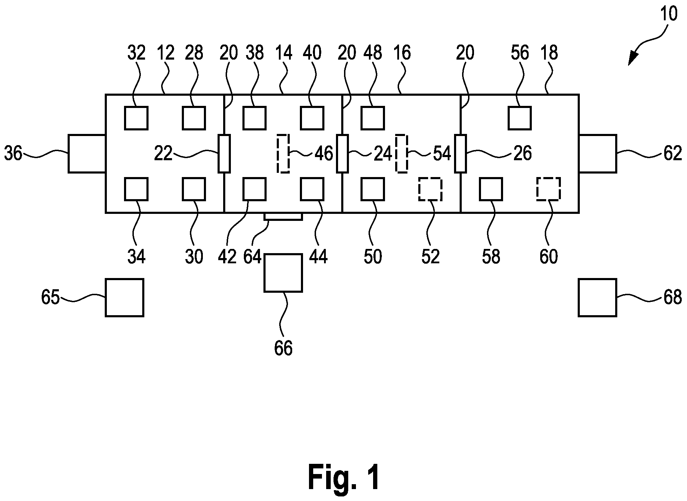

Fig. 1 zeigt eine erste Ausführungsform eines Isolatorsystems 10 zum Füllen eines oder mehrerer Behälter. Das Isolatorsystem 10 kann als aseptischer Isolator, insbesondere als Reinraum oder Reinstraum ausgebildet sein.

Das Isolatorsystem 10 weist ein Entnahmemodul 12, ein Füllmodul 14, ein Bördelmodul 16 und ein Außenwaschmodul 18 auf. Das Füllmodul 14 ist zwischen dem Entnahmemodul 12 und dem Bördelmodul 16 angeordnet. Das Bördelmodul 16 ist zwischen dem Füllmodul 14 und dem Außenwaschmodul 18 angeordnet.

Die Module 12, 14, 16, 18 sind durch Trennwände 20 voneinander getrennt. In jeder Trennwand ist eine Übergabestation 22, 24, 26 angeordnet, mittels der Behälter zwischen den angrenzenden Modulen übergeben werden können. Die Übergabestation 22 ist zwischen dem Entnahmemodul 12 und dem Füllmodul 14 angeordnet. Die Übergabestation 22 kann auch als erste Übergabestation bezeichnet werden. Die Übergabestation 24 ist zwischen dem Füllmodul 14 und dem Bördelmodul 16 angeordnet. Die Übergabestation 24 kann auch als zweite Übergabestation bezeichnet werden. Die Übergabestation 26 ist zwischen dem Bördelmodul 16 und dem Außenwaschmodul 18 angeordnet.

Das Isolatorsystem 10 weist zudem eine Steuereinrichtung 68 auf. Die Steuereinrichtung 68 ist dazu eingerichtet, die Funktionen der einzelnen Module 12, 14, 16, 18 zu steuern.

Das Entnahmemodul 12 ist dazu ausgebildet, einen oder mehrere Behälter aus einem Nest zu entnehmen. Dazu weist das Entnahmemodul 12 eine Entnahmestation 28 auf, in der Behälter aus dem Nest entnommen werden können.

Das Entnahmemodul 12 weist des Weiteren eine Handhabungseinrichtung 30 auf. Die Handhabungseinrichtung 30 ist dazu ausgebildet, einen oder mehrere Behälter innerhalb des Entnahmemoduls zu handhaben. Die Steuereinrichtung 68 steuert die Handhabungseinrichtung 30 derart, dass die Handhabungseinrichtung 30 in der Entnahmestation 28 einen Behälter aus dem Nest entnimmt und den Behälter zu der Übergabestation 22 transferiert. Insbesondere kann die Steuereinrichtung 68 die Handhabungseinrichtung 30 derart steuern, dass die Behälter nacheinander aus dem Nest entnommen und zu der Übergabestation 22 transferiert werden.

Das Entnahmemodul 12 grenzt an eine Transferschleuse 36 an, in der dem Entnahmemodul 12 ein Nest mit Behältern bereitgestellt werden kann. Das Nest kann in einer Transportwanne angeordnet sein. Die Transportwanne kann mittels einer Folie verschlossen sein. Die Transferschleuse kann als H2O2-Schleuse ausgebildet sein, in der eine in den Isolator eingebrachte Transportwanne mittels H2O2-Begasung dekontaminiert werden kann.

Zum Entfernen der Folie weist das Entnahmemodul 12 des Weiteren eine Entpackstation 32 auf. Beispielsweise kann in der Entpackstation 32 die Folie von der Transportwanne abgezogen werden.

Das Entnahmemodul 12 kann des Weiteren eine oder mehrere weitere Handhabungseinrichtungen 34 aufweisen, mittels denen das Nest innerhalb des Entnahmemoduls 12 gehandhabt werden kann. Mittels der Handhabungseinrichtungen 34 kann die Transportwanne mit darin verpacktem Nest von der Transferschleuse zu der Entpackstation transferiert werden. Nach dem Entfernen der Folie kann die Transportwanne mit Nest zu der Entnahmestation 28 transferiert werden. Bevor die Handhabungseinrichtung 30 einzelne Behälter aus dem Nest entnimmt, kann das Nest mittels der Handhabungseinrichtungen 34 aus der Transportwanne entnommen werden.

Das Füllmodul 14 ist dazu ausgebildet, einen oder mehrere Behälter mit einer Flüssigkeit zu füllen. Dazu weist das Füllmodul 14 eine Füllstation 38 auf, in der ein Behälter gefüllt werden kann. Hierzu kann die Füllstation 38 eine oder mehrere Füllnadeln zum Abgeben der Flüssigkeit aufweisen.

Das Füllmodul 14 weist des Weiteren eine Stopfensetzstation 40 auf, in der ein Stopfen auf einen oder mehrere Behälter aufgesetzt werden kann. Die Stopfensetzstation 40 weist dazu Mittel zum Aufsetzen eines Stopfens auf.

Das Füllmodul 14 weist des Weiteren eine erste Handhabungseinrichtung 42 und eine zweite Handhabungseinrichtung 44 auf. Die Handhabungseinrichtungen 42, 44 sind dazu ausgebildet einen oder mehrere Behälter innerhalb des Füllmoduls 14 zu handhaben.

Die Steuereinrichtung 68 steuert die erste Handhabungseinrichtung 42 derart, dass die erste Handhabungseinrichtungen 42 einen Behälter aus der ersten Übergabestation 22 entnimmt und zu der Füllstation transferiert. In der Füllstation wird der Behälter gefüllt. Die Steuereinrichtung 68 steuert die Füllstation 38 zum Füllen des Behälters. Nach dem Füllen steuert die Steuereinrichtung 68 die erste und/oder die zweite Handhabungseinrichtung 42, 44 derart, dass der gefüllte Behälter von der Füllstation 38 zu der Stopfensetzstation transferiert wird. In der Stopfensetzstation 40 wird ein Stopfen auf den Behälter aufgesetzt. Die Steuereinrichtung 68 steuert die Stopfensetzstation 40 zum Aufsetzen des Stopfens. Nach dem Aufsetzen des Stopfens steuert die steuert die Steuereinrichtung 68 die zweite Handhabungseinrichtung 44 derart, dass die zweite Handhabungseinrichtung 44 den Behälter von der Stopfensetzstation 40 zu der zweiten Übergebestation 24 transferiert und an die zweite Übergebestation 24 abgibt.

Zwischen der Füllstation 38 und der Stopfensetzstation 40 kann eine Zwischenstation 46 angeordnet sein, die als Übergabestation ausgebildet ist. Zum Transferieren des Behälters von der Füllstation 38 zu der Stopfensetzstation 40 kann die Steuereinrichtung 68 die erste und die zweite Handhabungseinrichtung 42, 44 derart steuern, dass die erste Handhabungseinrichtung 42 den Behälter von der Füllstation 38 zu der Zwischenstation 46 transferiert und die zweite Handhabungseinrichtung 44 den Behälter von der Zwischenstation 46 zu der Stopfensetzstation 40 transferiert.

Das Bördelmodul 16 ist dazu ausgebildet, einen oder mehrere Behälter zu verschließen. Dazu weist das Bördelmodul 16 eine Bördelstation 48 auf, in der ein oder mehrere Behälter verschlossen werden können. Insbesondere können die Behälter in der Bördelstation 48 mittels eines Deckels, insbesondere einer Aluminiumkappe, verschlossen werden. Dazu wird der Deckel in der Bördelstation 48 auf die Öffnung des entsprechenden Behälters aufgesetzt und auf dem oberen Rand des Behälters gebördelt.

Das Bördelmodul 16 weist des Weiteren eine Handhabungseinrichtung 50 auf, mittels der ein oder mehrere Behälter innerhalb des Bördelmoduls 16 gehandhabt werden können. Zusätzlich kann das Bördelmodul 16 auch eine weitere Handhabungseinrichtung 52 aufweisen, mittels der ein Behälter zusätzlich innerhalb des Bördelmoduls 16 gehandhabt werden kann.

Die Steuereinrichtung 68 steuert die Handhabungseinrichtung 50 derart, dass die Handhabungseinrichtung einen gefüllten Behälter aus der Übergabestation 24 entnimmt und zu der Bördelstation 48 transferiert. In der Bördelstation 48 wird der Behälter verschlossen. Die Steuereinrichtung 68 steuert die Bördelstation 48 zum Verschließen des Behälters. Nach dem Verschließen des Behälters steuert die Steuereinrichtung 68 die Handhabungseinrichtungen 50, 52 derart, dass eine der Handhabungseinrichtungen 50, 52 den Behälter von der Bördelstation 48 zu der Übergebestation 26 transferiert und an die zweite Übergebestation 26 abgibt.

Zwischen der Bördelstation 48 und der Übergebestation 26 kann eine Zwischenstation 54 angeordnet sein, die als Übergabestation ausgebildet ist. Zum Transferieren des Behälters von der Bördelstation 48 zu der Übergebestation 26 kann die Steuereinrichtung 68 die Handhabungseinrichtungen 50, 52 derart steuern, dass die Handhabungseinrichtung 50 den Behälter von der Bördelstation 48 zu der Zwischenstation 54 transferiert und die Handhabungseinrichtung 52 den Behälter von der Zwischenstation 46 zu der Übergebestation 26 transferiert.

Das Außenwaschmodul 18 ist dazu ausgebildet, einen oder mehrere Behälter außenzuwaschen. Dazu weist das Außenwaschmodul 18 eine Außenwaschstation 56 auf, in der ein oder mehrere Behälter außengewaschen werden können.

Das Außenwaschmodul 18 weist des Weiteren eine Handhabungseinrichtung 58 auf, mittels der ein oder mehrere Behälter innerhalb des Außenwaschmoduls 18 gehandhabt werden kann. Zusätzlich kann das Außenwaschmodul 18 auch eine weitere Handhabungseinrichtung 60 aufweisen, mittels der ein oder mehrere Behälter zusätzlich innerhalb des Außenwaschmoduls 18 gehandhabt werden kann.

Das Außenwaschmodul 18 kann an eine Transferschleuse 62 angrenzen, aus der ein oder mehrere Behälter ausgeschleust werden können. Über eine weitere Transportvorrichtung kann der ausgeschleuste Behälter dann abgeführt werden. Statt die Behälter über eine Transferschleuse auszuschleusen kann vorgesehen sein, dass die die Behälter in ein Magazin außerhalb des Isolators ausgeschoben werden. Alternativ können die Behälter auf ein Transportband mit entsprechendem Abtransport aus dem Isolator heraus abgesetzt werden. Des Weiteren können die Behälter auch in eine Transportschnecke mit entsprechendem Abtransport aus dem Isolator heraus abgesetzt werden. Des Weiteren kann auch eine Einheit vorgesehen sein, mittels der der Behälter in ein Nest eingesetzt wird, das mit entsprechendem Abtransport aus dem Isolator heraus transportiert wird.

Die Steuereinrichtung 68 steuert die Handhabungseinrichtung 58 derart, dass die Handhabungseinrichtung 58 einen verschlossenen Behälter aus der Übergabestation 24 entnimmt und zu der Außenwaschstation 56 transferiert. In der Außenwaschstation 56 wird der Behälter außengewaschen. Nach dem Außenwaschen steuert die Steuereinrichtung 68 die eine der Handhabungseinrichtungen 58, 60 derart, dass eine der Handhabungseinrichtungen 58, 60 den Behälter von der Außenwaschstation 56 zu der Transferschleuse 62 transferiert und in dieser anordnet.

Das Füllmodul 14 kann eine Tür 64 aufweisen. Über die Tür 64 wird ein Zugang von Außen in das Isolatorsystem 10, insbesondere in das Füllmodul 14, bereitgestellt. Über die Tür 64 kann ein manueller Eingriff in das Füllmodul 14 erfolgen, beispielsweise wenn in dem Füllmodul 14 eine Störung vorliegt.

Das Isolatorsystem 10 kann des Weiteren eine Lüftungseinrichtung 65 aufweisen, mittels der in dem Isolatorsystem eine definierte Atmosphäre erzeugt werden kann.

Jedes der Module des Isolatorsystems 10 kann mit einer Dekontaminationseinrichtung 66 gekoppelt werden. Die Dekontaminationseinrichtung 66 ist dazu ausgebildet, das Modul, mit dem es gekoppelt ist, zu dekontaminieren. Beispielsweise kann die Dekontaminationseinrichtung 66 dazu das entsprechende Modul mit Wasserstoffperoxid begasen. Die Steuereinrichtung 68 kann die Dekontaminationseinrichtung 66 steuern. Vorzugsweise kann die Dekontaminationseinrichtung 66 über die Lüftungseinrichtung 65 mit den einzelnen Modulen gekoppelt sein, um die einzelnen Module mit Wasserstoffperoxid zu begasen.

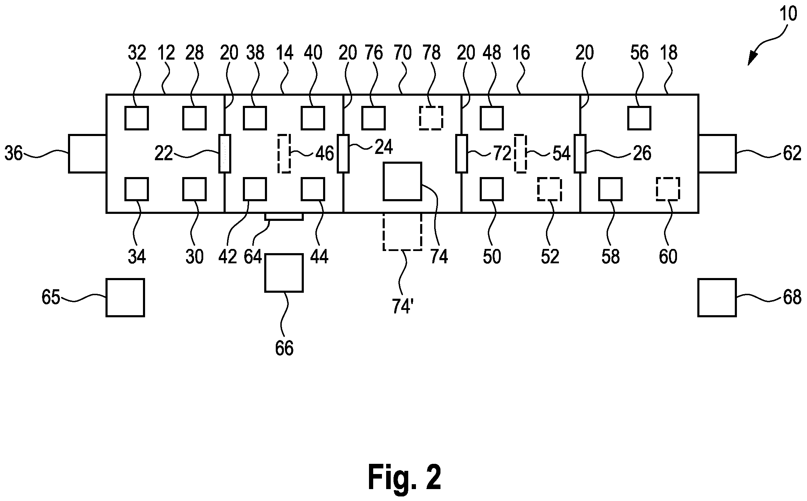

Fig. 2 zeigt eine zweite Ausführungsform des Isolatorsystems 10. Das Isolatorsystem 10 der zweiten Ausführungsform weist im Wesentlichen dieselben Elemente wie das Isolatorsystem 10 der ersten Ausführungsform. Gleiche Elemente sind mit gleichen Bezugszeichen gekennzeichnet und werden nicht näher erläutert.

Das Isolatorsystem 10 der zweiten Ausführungsform weist zusätzlich ein Gefriertrocknungsmodul 70 auf. Das Gefriertrocknungsmodul 70 ist zwischen dem Füllmodul 14 und dem Bördelmodul 16 angeordnet.

Die Übergabestation 24 ist zwischen dem Füllmodul 14 und dem Gefriertrocknungsmodul 70 angeordnet. Eine weitere Übergabestation 72 ist zwischen dem Gefriertrocknungsmodul 70 und dem Bördelmodul 16 angeordnet.

Das Gefriertrocknungsmodul 70 ist dazu ausgebildet, einen oder mehrere Behälter gefrierzutrocknen. Dazu weist das Gefriertrocknungsmodul 70 einen Gefriertrockner 74 auf. Der Gefriertrockner 74 ist dazu ausgebildet, gefüllte Behälter gefrierzutrocknen.

Alternativ kann der Gefriertrockner 74 auch außerhalb des Gefriertrocknungsmoduls 70, insbesondere außerhalb des Isolators, angeordnet sein, wobei der Gefriertrockner 74 mit dem Gefriertrocknungsmoduls 70 gekoppelt ist. Das Gefriertrocknungsmodul 70 kann dazu ausgebildet sein, die den Gefriertrockner 74 mit gefrierzutrocknenden Behältern zu beladen und nach dem Gefriertrocknen die gefriergetrockneten Behälter aus dem Gefriertrockner wieder zu entladen.

Das Gefriertrocknungsmodul 70 weist des Weiteren eine Handhabungseinrichtung 76 auf, mittels der ein oder mehrere Behälter innerhalb des Gefriertrocknungsmoduls 70 gehandhabt werden können. Zusätzlich kann das Gefriertrocknungsmodul 70 auch eine weitere Handhabungseinrichtung 78 aufweisen, mittels der ein Behälter zusätzlich innerhalb des Gefriertrocknungsmoduls 70 gehandhabt werden kann.

Die Steuereinrichtung 68 steuert die Handhabungseinrichtung 76 derart, dass die Handhabungseinrichtung 76 einen gefüllten Behälter aus der Übergabestation 24 entnimmt und zu dem Gefriertrockner 74 transferiert. Vorzugsweise setzt die Handhabungseinrichtung 76 den Behälter dabei in den Gefriertrockner 74 ein. In dem Gefriertrockner 74 wird der Behälter gefriergetrocknet. Nach dem Gefriertrocknen steuert die Steuereinrichtung 68 die eine der Handhabungseinrichtungen 76, 78 derart, dass eine der Handhabungseinrichtungen 76, 78 den Behälter von dem Gefriertrockner 74 zu der Übergabestation 26 transferiert und in dieser anordnet.

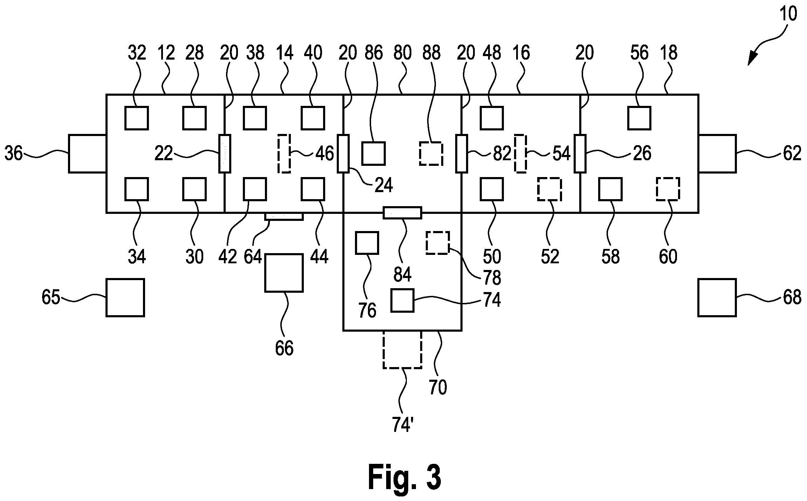

Fig. 3 zeigt eine dritte Ausführungsform des Isolatorsystems 10. Das Isolatorsystem 10 der dritten Ausführungsform weist im Wesentlichen dieselben Elemente wie das Isolatorsystem 10 der zweiten Ausführungsform. Gleiche Elemente sind mit gleichen Bezugszeichen gekennzeichnet und werden nicht näher erläutert.

Das Isolatorsystem 10 der dritten Ausführungsform weist zusätzlich ein Transfermodul 80 auf, das zwischen dem Füllmodul 14, dem Bördelmodul 16 und dem Gefriertrocknungsmodul 70 angeordnet ist.

Die Übergabestation 24 ist zwischen dem Füllmodul 14 und dem Transfermodul 80 angeordnet. Eine weitere Übergabestation 82 ist zwischen dem Transfermodul 80 und dem Bördelmodul 16 angeordnet. Eine weitere Übergabestation 84 ist zwischen dem Transfermodul 80 und dem Gefriertrocknungsmodul 70 angeordnet.

Das Transfermodul 80 ist dazu ausgebildet, einen oder mehrere Behälter zwischen dem Füllmodul 14, dem Bördelmodul 16 und dem Gefriertrocknungsmodul 70 zu transferieren.

Dazu weist das Transfermodul 80 eine Handhabungseinrichtung 86 auf, mittels der ein Behälter innerhalb des Transfermoduls 80 gehandhabt werden kann. Zusätzlich kann das Transfermodul 80 auch eine weitere Handhabungseinrichtung 88 aufweisen, mittels der ein Behälter zusätzlich innerhalb des Transfermoduls 80 gehandhabt werden kann.

An das Gefriertrocknungsmodul 70 grenzt in der dritten Ausführungsform des Isolatorsystems 10 nur eine einzige Übergabestation 84 an. Dementsprechend entnimmt die Handhabungseinrichtung 76 einen gefüllten Behälter aus der Übergabestation 84 und transferiert den Behälter zu dem Gefriertrockner 74 zum Gefriertrocknen. Nach dem Gefriertrocknen wird der Behälter mittel einer der Handhabungseinrichtungen 76, 78 wieder zu der Übergabestation 84 transferiert.

In den Figuren 1 bis 3 kann zudem vorgesehen sein, dass die Behälter nach dem Füllen und Stopfensetzen in dem Füllmodul 14 oder dem Verschließen in dem Bördelmodul 16 oder nach dem Außenwaschen in dem Außenwaschmodul 18 zurück in das Entnahmemodul 12 transferiert werden, um die Behälter wieder in das Nest einzusetzen, aus dem sie entnommen worden sind. Dazu können die Behälter mittels der Handhabungseinrichtungen der einzelnen Module in entgegengesetzter Richtung transferiert werden.

In den Figuren 1 bis 3 kann jedes Modul 12, 14, 16, 18, 70, 80 dazu ausgebildet sein, zwei oder mehr Behälter gleichzeitig zu handhaben. Dazu kann jede Handhabungseinrichtung 30, 42, 44, 50, 52, 58, 60 derart ausgebildet sein, dass sie zwei Behälter gleichzeitig handhaben kann. Insbesondere kann jede Handhabungseinrichtung, 42, 44, 50, 52, 58, 60 zwei Greifwerkzeuge aufweisen, mit denen zwei Behälter gleichzeitig gegriffen und transferiert werden können. Des Weiteren kann jede Übergabestation 22, 24, 26, 72, 82, 84 mindestens zwei, vorzugsweise vier oder mehr, Aufnahmen zum Aufnehmen jeweils eines Behälters aufweisen. Des Weiteren kann jede Station der Module 12, 14, 16, 18, 70, 80 derart ausgebildet sein, dass sie zwei Behälter gleichzeitig handhaben kann. Beispielsweise können in der Entnahmestation 28 zwei Behälter aus dem Nest entnommen werden, in der Füllstation 38 zwei Behälter gefüllt werden, in der Stopfensetzstation 40 zwei Stopfen auf zwei Behälter gesetzt werden, in der Bördelstation 48 zwei Behälter mit einem Deckel verschlossen werden, in dem Gefriertrockner 74 zwei Behälter eingesetzt bzw. entnommen werden und in der Außenwaschstation 56 zwei Behälter außengewaschen werden.

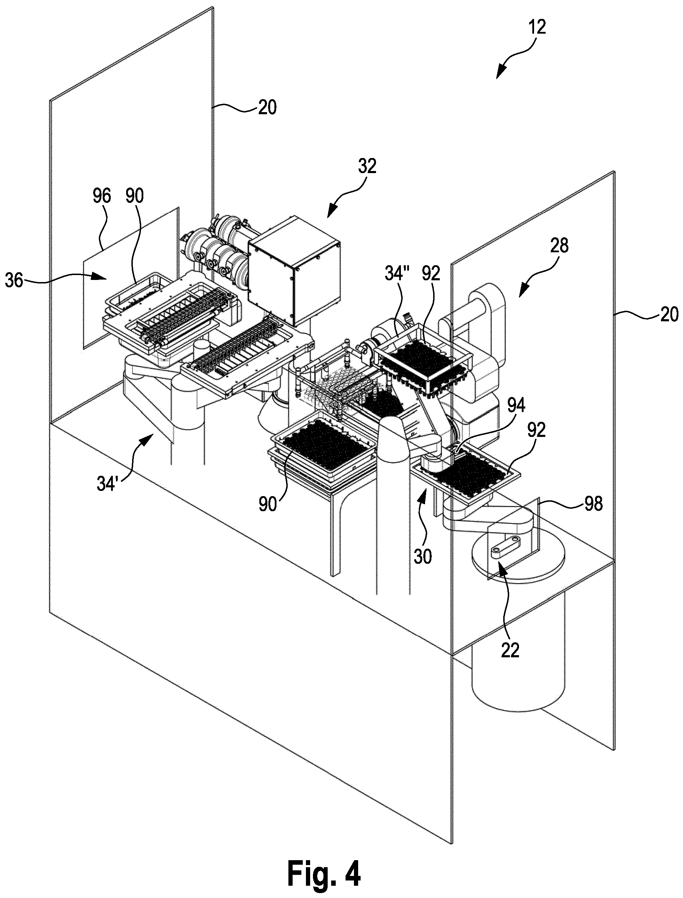

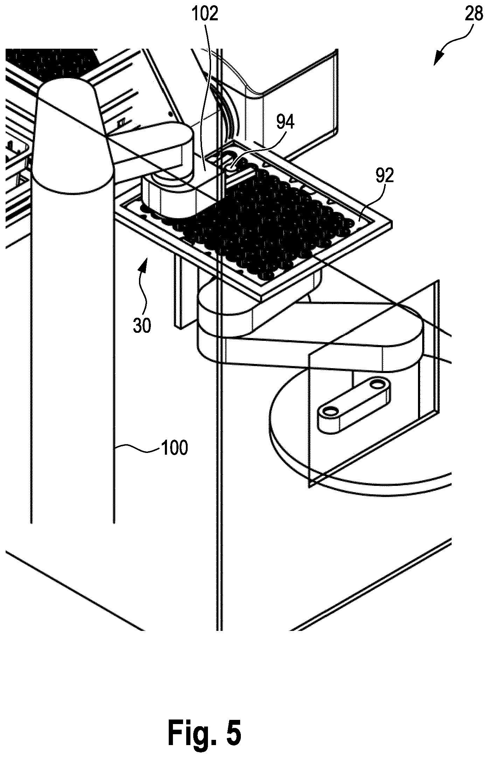

Fig. 4 zeigt eine Ausführungsform eines Entnahmemoduls 12 des Isolatorsystems 10. In Fig. 5 ist die Entnahmestation 28 des Entnahmemoduls 12 im Detail dargestellt.

Das Entnahmemodul 12 weist zwei Handhabungseinrichtungen 34', 34" zum Handhaben der Nester auf. Die Handhabungseinrichtungen 30, 34' und 34" sind als Roboter ausgebildet. Die Handhabungseinrichtungen 30, 34' und 34" weisen jeweils einen Endeffektor 102 auf, mittels dem die Transportwanne 90, das Nest 92 und/oder die Behälter 94 gehandhabt werden können. Des Weiteren weisen die Handhabungseinrichtungen 30, 34' und 34" jeweils eine Trägerstruktur 100 auf, mittels der der entsprechende Endeffektor 102 in dem Entnahmemodul 12 bewegbar ist. Zum Greifen der Behälter 94 kann der Endeffektor 102 der Handhabungseinrichtung 30 beispielsweise ein Greifwerkzeug aufweisen. Das Greifwerkzeug ist vorzugsweise derart ausgebildet, dass zwei Behälter 94 gleichzeitig gegriffen und transferiert werden können.

Mittels einer Trennwand 20 ist das Entnahmemodul 12 von der Transferschleuse 36 getrennt. Die Trennwand 20 weist eine Öffnung 96 auf, durch die das Entnahmemodul 12 mit der Transferschleuse 36 verbunden ist. Die Öffnung 96 kann verschließbar sein, um die Transferschleuse 36 und das Entnahmemodul 12 voneinander zu isolieren.

Durch die Öffnung 96 kann eine Handhabungseinrichtung 34' der Handhabungseinrichtungen 34 eine in der Transferschleuse 36 bereitgestellte Transportwanne 90 entnehmen und zu der Entpackstation 32 transferieren. In jeder Transportwanne 90 ist ein Nest 92 angeordnet. In jedem Nest 92 ist eine Mehrzahl von Behältern 94 angeordnet. Jede Transportwanne 90, die in der Transferschleuse 36 bereitgestellt wird, ist mit einer Folie verschlossen.

In der Entpackstation 32 wird die Folie von der Transportwanne 90 entfernt, um die Transportwanne 90 zu entpacken, insbesondere zu öffnen. Nach dem Entpacken transferiert die Handhabungseinrichtung 34' die entpackte Transportwanne 90 weiter zu der Entnahmestation 28. Die Handhabungseinrichtung 34' kann die Transportwanne 90 in der Entnahmestation 28 in einer Halterung absetzen. Mittels einer Handhabungseinrichtung 34" der Handhabungseinrichtungen 34 kann das Nest 92 aus der Transportwanne 90 entnommen werden und zu einer weiteren Halterung der Entnahmestation 28 transferiert und in dieser abgesetzt werden.

Mittels einer Trennwand 20 ist das Entnahmemodul 12 von dem Füllmodul 14 getrennt. Die Trennwand 20 weist eine Öffnung 98 auf, durch die das Entnahmemodul 12 mit dem Füllmodul 14 verbunden ist. In der Öffnung 98 ist die Übergabestation 22 angeordnet. Die Übergabestation 22 kann mindestens eine Aufnahme zum Aufnehmen eines Behälters 94 aufweisen. Insbesondere weist die Übergabestation 22 mindestens zwei Aufnahmen auf.

Mittels der Handhabungseinrichtung 30 werden die Behälter 94 aus dem Nest 92 entnommen und zu der Übergabestation 22 transferiert. Die Handhabungseinrichtung 30 kann die entnommenen Behälter 94 in der Übergabestation 22 jeweils in einer Aufnahme anordnen. In der Übergabestation 22 werden die Behälter von dem Entnahmemodul 12 an das Füllmodul 14 übergeben. Insbesondere können die Behälter 94 einzeln oder paarweise mittels der Handhabungseinrichtung 30 aus dem Nest 92 entnommen und zu der Übergabestation 22 transferiert werden.

Nachdem alle Behälter 94 aus dem Nest 92 entnommen worden sind, kann mittels der Handhabungseinrichtung 34" das leere Nest 92 zurück in die zugehörige Transportwanne 90 gesetzt werden. Die Transportwanne 90 kann dann mittels der Handhabungseinrichtung 34' zu der Transferschleuse 36 oder zu einer weiteren (nicht dargestellten) Transferschleuse transferiert werden, um die Transportwanne 90 mit leerem Nest 92 aus dem Entnahmemodul auszuschleusen. Alternativ kann auch vorgesehen sein, dass gefüllte, verschlossene und/oder außengewaschene Behälter 94 über die Übergabestation 22 zurück in das Entnahmemodul eingeführt werden, um diese Behälter wieder in das Nest 96 zu setzen, aus dem sie entnommen wurden. Dann kann das wieder mit Behältern gefüllte Nest mittels der Handhabungseinrichtungen 34', 34" ausgeschleust werden.

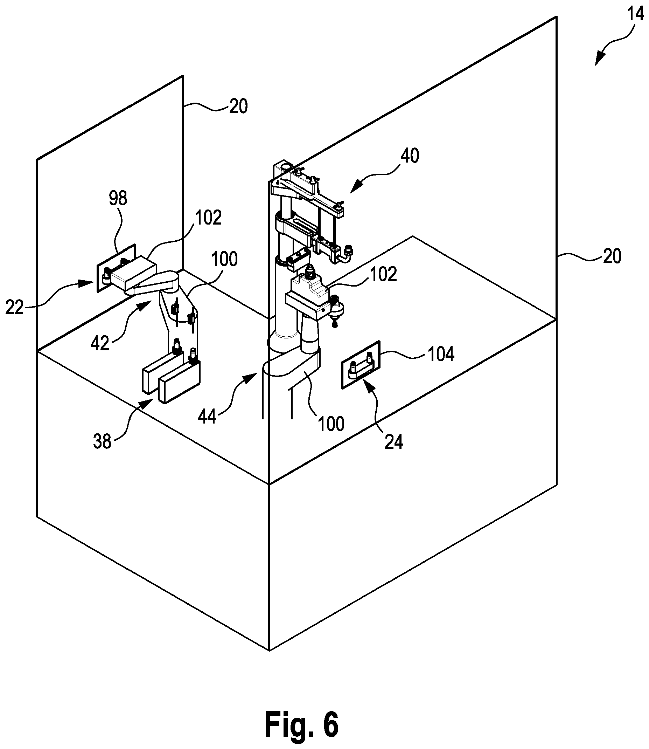

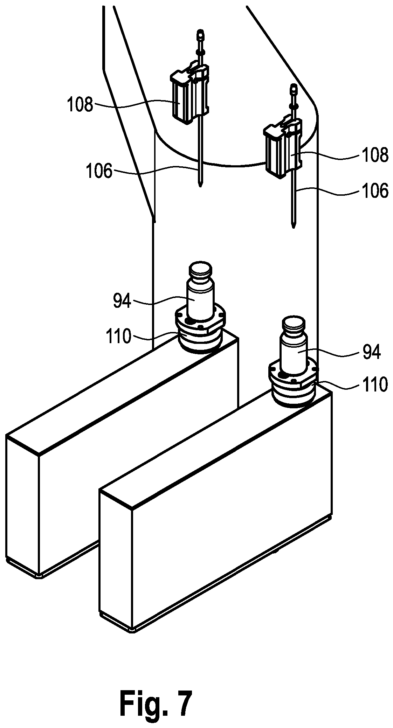

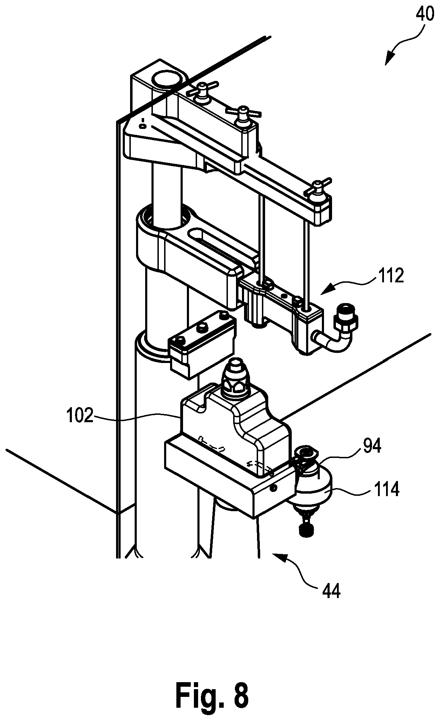

Fig. 6 zeigt eine Ausführungsform eines Füllmoduls 14 des Isolatorsystems 10. In Fig. 7 ist die Füllstation 38 des Füllmoduls 14 im Detail dargestellt. In Fig. 8 ist die Stopfensetzstation 40 des Füllmoduls 14 im Detail dargestellt.

Die Handhabungseinrichtungen 42 und 44 sind als Roboter ausgebildet. Die Handhabungseinrichtungen 42 und 44 weisen jeweils einen Endeffektor 102 auf, mittels dem die Behälter 94 gehandhabt werden können. Des Weiteren weisen die Handhabungseinrichtungen 42 und 44 jeweils eine Trägerstruktur 100 auf, mittels der der entsprechende Endeffektor 102 in dem Füllmodul 14 bewegbar ist. Zum Greifen der Behälter 94 kann der Endeffektor 102 der Handhabungseinrichtungen 42 und 44 beispielsweise ein Greifwerkzeug aufweisen. Das Greifwerkzeug ist vorzugsweise derart ausgebildet, dass zwei Behälter 94 gleichzeitig gegriffen und transferiert werden können.

Mittels der Handhabungseinrichtung 42 werden die Behälter 94 von der Übergabestation 22 zu der Füllstation transferiert. Insbesondere können die Behälter 94 mittels der Handhabungseinrichtung 42 entweder einzeln oder paarweise aus der Übergabestation 22 entnommen und zu der Füllstation transferiert werden.

Die Füllstation 38 weist zwei Füllnadeln 106, zwei Füllnadelhalter 108 zum Halten der Füllnadeln 106, zwei Dosiereinrichtungen (nicht dargestellt) und zwei Wiegereinrichtungen 110 auf. Jede Füllnadel 106 ist dazu ausgebildet, in einen Behälter 94 Flüssigkeit abzugeben. Zum Abgeben der Flüssigkeit kann jede Füllnadel 106 entweder oberhalb einer Öffnung des Behälters 94 angeordnet werden oder in den Behälter 94 durch die Öffnung eingeführt werden. Jede Dosiereinrichtung ist dazu ausgebildet, die abzugebende Flüssigkeitsmenge jeweils einer Füllnadel 106 zu regeln. Die Füllnadeln können mit einem Tank verbunden sein, der als Flüssigkeitsreservoir dient. Jede Dosiereinrichtung ist in einem Fluidpfad zwischen dem Tank und der entsprechenden Füllnadel 106 angeordnet. Jede Wiegeeinrichtung 110 ist dazu ausgebildet, das Gewicht eines Behälters 94 zu bestimmen, der auf der Wiegeeinrichtung 110 abgestellt ist. Jede Wiegeeinrichtung 110 ist unter je einer Füllnadel 106 angeordnet.

Mittels der Handhabungseinrichtung 42 können die Behälter 94 einzeln oder paarweise vor dem Befüllen auf der Wiegeeinrichtungen 110 abgesetzt und gewogen werden. Nach dem Wiegen kann die erste Handhabungseinrichtung 42 die gewogenen Behälter 94 wieder anheben und nach oben in Richtung der jeweiligen Füllnadel 106 bewegen, um die Füllnadel 106 in den jeweiligen zu füllenden Behälter 94 einzuführen. Die Füllnadel 106 kann dabei soweit in den Behälter 94 eingeführt werden, bis eine Spitze der Füllnadel 106 am Boden des Behälters 94 angeordnet ist. Am Boden bedeutet hierbei, dass die Spitze entweder auf dem Boden aufgesetzt ist oder aber in Bodennähe angeordnet ist. Insbesondere kann die Spitze der Füllnadel knapp oberhalb des Bodens angeordnet sein. Ein Abstand der Spitze der Füllnadel 106 zum Boden des Behälters 94 kann zwischen mindestens 1 mm und 2 cm, vorzugsweise zwischen 2 mm und 1 cm, insbesondere 3 mm, betragen.

Während des Füllvorgangs wird der Behälter 94 mittels der Handhabungseinrichtung 42 wieder nach unten bewegt, so dass ein Abstand zwischen dem Boden des Behälters 94 und der Spitze der Füllnadel 106 sich vergrößert. In anderen Worten wird die Füllnadel 106 während des Füllens aus dem Behälter 94 herausgezogen.

Nach dem Füllen wird jeder Behälter 94 wieder auf der Wiegeeinrichtungen 110 abgesetzt und ein zweites Mal gewogen. Aus dem Differenzgewicht zwischen dem ersten und zweiten Wiegen eines Behälters kann die Füllmenge ermittelt werden. Die ermittelte Füllmenge kann zur Qualitätskontrolle mit einer Soll-Füllmenge vergleichen werden.

Mittels der Handhabungseinrichtung 42 und/oder der Handhabungseinrichtung 44 können die Behälter einzeln oder paarweise von der Füllstation 38 zu der Stopfensetzstation 40 transferiert werden.

Die Stopfensetzstation 40 weist eine Stopfensetzvorrichtung 112 auf, mittels der ein Stopfen auf einen Behälter aufgesetzt werden kann. Mittels der Stopfensetzvorrichtung 112 können auch gleichzeitig zwei Stopfen auf zwei Behälter aufgesetzt werden. Die Stopfensetzstation 40 kann des Weiteren zwei Halter 114 für zwei Behälter 94 aufweisen. Die Halter 114 sind unter der Stopfensetzvorrichtung 112 angeordnet.

Mittels der Handhabungseinrichtung 42 und/oder der Handhabungseinrichtung 44 werden die Behälter einzeln oder paarweise unter der Stopfensetzvorrichtung 112. Dazu kann je ein Behälter auf je einem Halter abgesetzt werden. Die Stopfensetzvorrichtung 112 setzt dann nacheinander jeweils einen Stopfen auf einen Behälter auf. Alternativ kann die Stopfensetzvorrichtung 112 auch je zwei Stopfen gleichzeitig auf zwei in der Stopfensetzstation 40 angeordnete Behälter 94 aufsetzen.

Mittels einer Trennwand 20 ist das Füllmodul 14 von dem nachfolgenden Modul getrennt. Das nachfolgende Modul kann das Bördelmodul 16, das Gefriertrocknungsmodul 70 oder das Transfermodul 80 sein. Die Trennwand 20 weist eine Öffnung 104 auf, durch die das Füllmodul 14 mit dem nachfolgenden Modul verbunden ist. In der Öffnung 104 ist die Übergabestation 24 angeordnet. Die Übergabestation 24 kann mindestens eine Aufnahme zum Aufnehmen eines Behälters 94 aufweisen. Insbesondere weist die Übergabestation 24 mindestens zwei Aufnahmen auf.

Mittels der Handhabungseinrichtung 44 werden die Behälter 94 nach dem Stopfensetzen einzeln oder paarweise von der Stopfensetzstation 40 zu der Übergabestation 24 transferiert. Die Handhabungseinrichtung 44 kann die Behälter 94 in der Übergabestation 24 jeweils in einer Aufnahme anordnen. In der Übergabestation 24 werden die Behälter von dem Füllmodul 14 an das nachfolgende Modul übergeben.

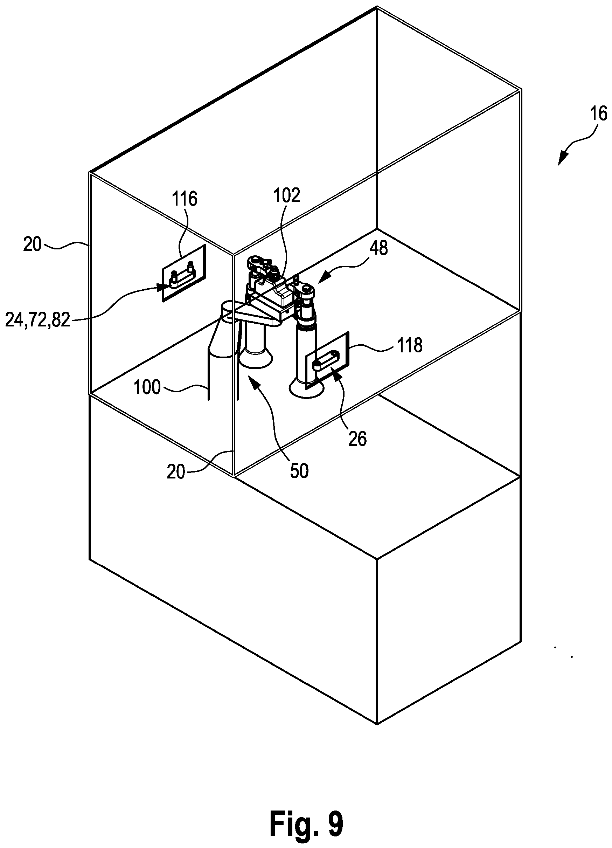

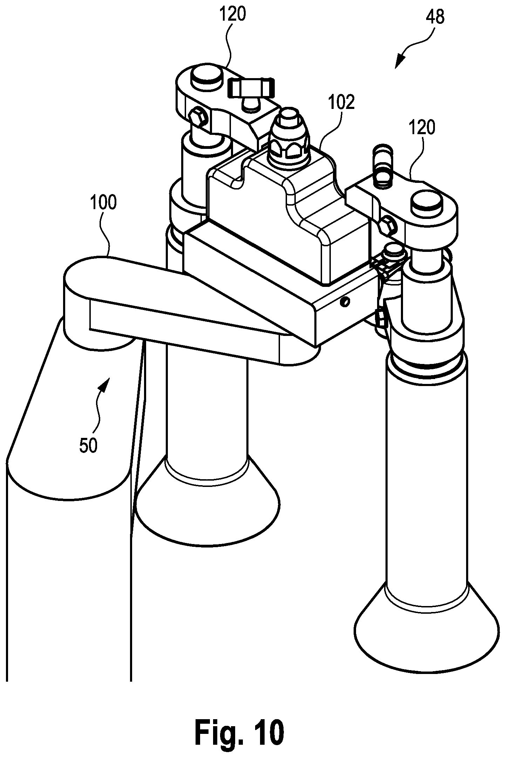

Fig. 9 zeigt eine Ausführungsform eines Bördelmoduls 16 des Isolatorsystems 10. In Fig. 10 ist die Bördelstation 48 des Bördelmoduls 16 im Detail dargestellt.

Die Handhabungseinrichtung 50 ist als Roboter ausgebildet. Die Handhabungseinrichtung 50 weist einen Endeffektor 102 auf, mittels dem die Behälter 94 gehandhabt werden können. Des Weiteren weist die Handhabungseinrichtung 50 eine Trägerstruktur 100 auf, mittels der der entsprechende Endeffektor 102 in dem Füllmodul 14 bewegbar ist. Zum Greifen der Behälter 94 kann der Endeffektor 102 der Handhabungseinrichtung 50 beispielsweise ein Greifwerkzeug aufweisen. Das Greifwerkzeug ist vorzugsweise derart ausgebildet, dass zwei Behälter 94 gleichzeitig gegriffen und transferiert werden können.

Mittels einer Trennwand 20 ist das Bördelmodul 16 von dem vorherigen Modul getrennt. Das vorherige Modul kann das Füllmodul 14, das Gefriertrocknungsmodul 70 oder das Transfermodul 80 sein. Die Trennwand 20 weist eine Öffnung 116 auf, durch die das Bördelmodul 16 mit dem vorherigen Modul verbunden ist. In der Öffnung 116 ist die entsprechende Übergabestation 24, 72, 82 zu dem vorherigen Modul angeordnet. Die Übergabestation 24, 72, 82 kann mindestens eine Aufnahme zum Aufnehmen eines Behälters 94 aufweisen. Insbesondere weist die Übergabestation 24, 72, 82 mindestens zwei Aufnahmen auf.

Mittels der Handhabungseinrichtung 50 werden die Behälter 94 von der Übergabestation 24, 72, 82 zu der Bördelstation 48 transferiert. Insbesondere können die Behälter 94 mittels der Handhabungseinrichtung 50 entweder einzeln oder paarweise aus der Übergabestation 24, 72, 82 entnommen und zu der Bördelstation 48 transferiert werden.

In der Bördelstation 48 werden die Behälter 94 einzeln oder paarweise nacheinander verschlossen. Insbesondere können die Behälter 94 in der Bördelstation 48 mittels eines Deckels verschlossen werden. Dazu wird der Deckel in der Bördelstation 48 auf die Öffnung des Behälters 94 aufgesetzt und auf dem oberen Rand des Behälters 94 gebördelt. Dazu kann die Bördelstation 48 zwei Bördeleinrichtungen 120 aufweisen. Jede Bördeleinrichtung 120 ist dazu ausgebildet, je einen Behälter 94 zu verschließen.

Mittels einer Trennwand 20 ist das Bördelmodul 16 von dem Außenwaschmodul 18 getrennt. Die Trennwand 20 weist eine Öffnung 118 auf, durch die das Bördelmodul 16 mit dem Außenwaschmodul 18 verbunden ist. In der Öffnung 118 ist die Übergabestation 26 angeordnet. Die Übergabestation 26 kann mindestens eine Aufnahme zum Aufnehmen eines Behälters 94 aufweisen. Insbesondere weist die Übergabestation 26 mindestens zwei Aufnahmen auf.

Mittels der Handhabungseinrichtung 50 oder der (nicht dargestellten) Handhabungseinrichtung 52 werden die Behälter 94 nach dem Bördeln einzeln oder paarweise von der Bördelstation 48 zu der Übergabestation 26 transferiert. Die Handhabungseinrichtung 50 kann die Behälter 94 in der Übergabestation 26 jeweils in einer Aufnahme anordnen. In der Übergabestation 26 werden die Behälter von dem Füllmodul 14 an das Außenwaschmodul 18 übergeben.

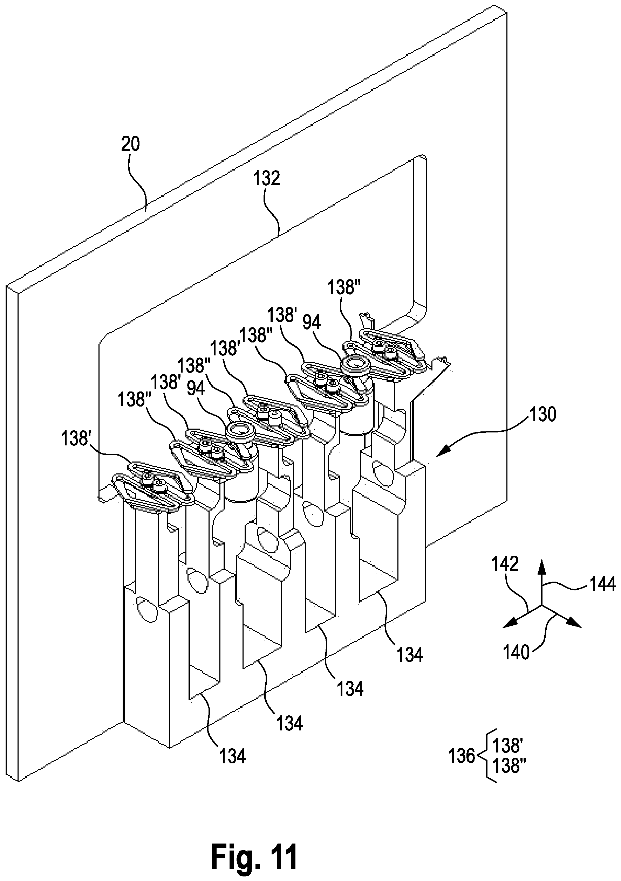

Die Figuren 11 bis 15 zeigen eine Ausführungsform einer Übergabestation 130. Jede Übergabestation 22, 24, 26, 72, 82, 84 des Isolatorsystems 10 aus den Figuren 1 bis 3 kann entsprechend der Übergabestation aus den Figuren 11 bis 15 ausgebildet sein.

Die Übergabestation 130 kann in einer Öffnung 132 einer Trennwand 20 zwischen zwei Modulen angeordnet sein. Die Übergabestation 130 ist dazu ausgebildet, dass mindestens ein Behälter 94 zwischen einem ersten Modul und einem zweiten Modul übergeben werden kann. Insbesondere kann die Übergabestation 130 dazu ausgebildet sein, dass mittels der Übergabestation 130 eine Mehrzahl von Behältern 94 gleichzeitig übergeben werden kann.

Die Behälter 94 werden in einer Transferrichtung 140 von dem ersten Modul zu dem zweiten Modul übergeben.

Die Trennwand 20 ist quer, vorzugsweise senkrecht zu der Transferrichtung 140 angeordnet und erstreckt sich in einer vertikalen Richtung 144 und einer horizontalen Richtung 142. Die vertikale Richtung 144 und die horizontale Richtung 142 sind quer, vorzugsweise senkrecht zu der Transferrichtung 140 angeordnet. Die Öffnung 132 erstreckt sich ebenfalls in der vertikalen Richtung 144 und der horizontalen Richtung 142. In anderen Worten bildet die Öffnung 132 in der Trennwand 20 eine Aussparung, durch die die Behälter 94 in der Transferrichtung 140 hindurchgeführt werden können.

Die Übergabestation 130 weist dazu mindestens eine Aufnahme 134 zum Aufnehmen eines Behälters 94 auf. Insbesondere kann die Übergabestation 130 eine Mehrzahl von Aufnahmen 134 zum Aufnehmen jeweils eines Behälters 94 aufweisen. In der dargestellten Ausführungsform weist die Übergabestation 130 vier Aufnahmen 134 auf.

Jede Aufnahme 134 ist in der Transferrichtung 140 zu beiden Modulen hin geöffnet. Dadurch kann jeweils ein Behälter 94 in der Transferrichtung 140 in die jeweilige Aufnahme 134 mittels einer Handhabungseinrichtung des ersten Moduls eingebracht werden. Ebenso kann jeweils ein Behälter 94 in der Transferrichtung 140 aus der jeweilige Aufnahme 134 mittels einer Handhabungseinrichtung des zweiten Moduls entnommen werden. In anderen Worten ist jede Aufnahme 134 in der Transferrichtung 140 beidseitig geöffnet, so dass ein Behälter 94 in der Transferrichtung 140 in die Aufnahme 134 eingebracht und aus der Aufnahme 134 entnommen werden kann.

Jede Aufnahme 134 ist U-förmig ausgebildet. Jede Aufnahme weist dazu zwei Seitenflächen und eine Bodenfläche auf. Die zwei Seitenflächen sind in der horizontalen Richtung 142 voneinander beabstandet. Die Bodenfläche ist zwischen Seitenflächen angeordnet und bildet bezüglich der vertikalen Richtung 144 ein unteres Ende der Aufnahme 134. Das obere Ende der Aufnahme 134 ist offen. Ein Abstand der Seitenflächen in der horizontalen Richtung 142 ist so groß, dass ein Behälter 94 zwischen den Seitenflächen angeordnet werden kann.

Jede Aufnahme 134 ist des Weiteren derart ausgebildet, dass verschiedene Behälter 94 (beispielsweise Spritzen, Vials, Flaschen, Zylinderampullen, und dergleichen) mit unterschiedlicher Geometrie in der jeder Aufnahme 134 aufgenommen werden können. Insbesondere ist der Abstand der Seitenflächen in der horizontalen Richtung 142 so groß, dass Behälter 94 mit unterschiedlichen Durchmessern in jeder Aufnahme 134 aufgenommen werden können.

Die Übergabestation 130 weist des Weiteren für jede Aufnahme 134 eine Haltevorrichtung 136 zum Halten des Behälters 94 in der entsprechenden Aufnahme 134 auf. Die Haltevorrichtung weist eine Vorspanneinrichtung auf, die dazu ausgebildet ist, den Behälter 94 quer, vorzugsweise senkrecht, zu der Transferrichtung 140 zu klemmen. Insbesondere kann die Vorspanneinrichtung dazu ausgebildet sein, den Behälter 94 in der horizontalen Richtung 142 zu klemmen. Durch das Klemmen nehmen die Behälter 94 im Raum, insbesondere in den Raumrichtungen 140, 142, 144, eine definierte Position ein. Über diese definierte Position kann die Übergabe erfolgen.

Die Vorspanneinrichtung jeder Haltevorrichtung 136 wird durch ein erstes Klemmelement 138' und ein zweites Klemmelement 138" gebildet. Die Klemmelemente 138', 138" sind in einer Klemmrichtung voneinander beabstandet. Die Klemmrichtung ist quer, vorzugsweise senkrecht, zu der Transferrichtung 140 angeordnet. Insbesondere kann die Klemmrichtung parallel zu der horizontalen Richtung 142 angeordnet sein. Die Klemmelemente 138', 138" sind an dem oberen Ende der jeweiligen Aufnahme 134 angeordnet.

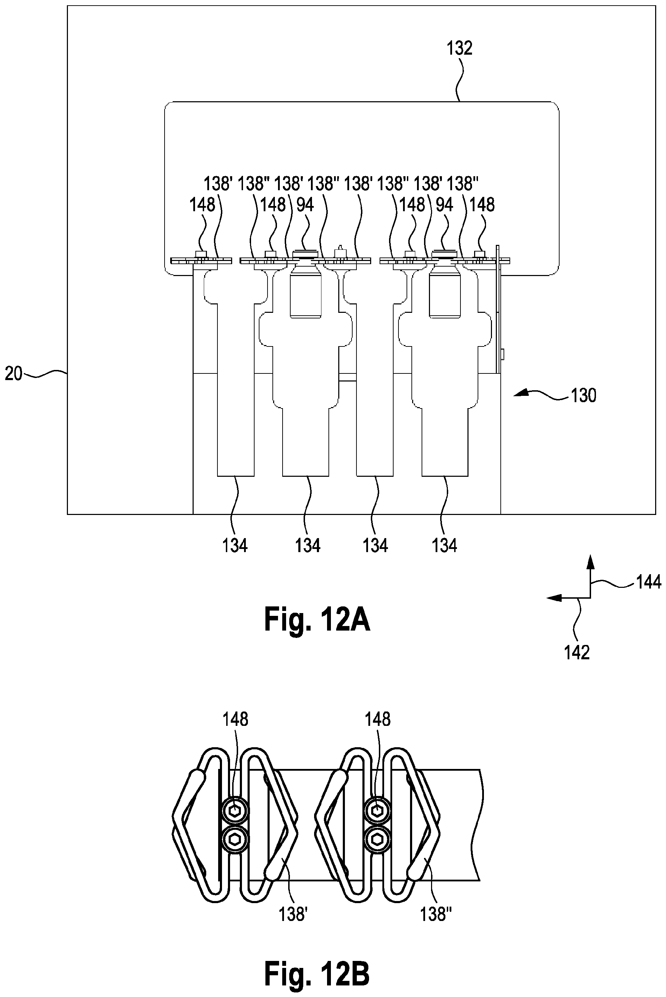

Die Klemmelemente 138', 138" sind zumindest in der horizontalen Richtung 142 elastisch ausgebildet. Die Klemmelemente 138', 138" können daher auch als elastische Elemente bezeichnet werden. Die Klemmelemente 138', 138" können beispielsweise als Federelemente ausgebildet sein, die derart angeordnet sind, dass ein Abstand der Klemmelemente 138', 138" in der horizontalen Richtung 142 gegenüber einem Ruhezustand variiert werden kann. Die Klemmelemente 138', 138" sind dabei zum Ruhezustand hin vorgespannt. Die Klemmelemente können insbesondere als dreieckige Bügel ausgebildet sein, wobei die Bügel der Klemmelemente 138', 138" spiegelsymmetrisch zueinander angeordnet sind. Insbesondere sind stumpfe Ecken der Bügel gegenüberliegend angeordnet. Die Klemmelemente 138', 138", insbesondere die als Federelemente oder elastische Elemente ausgebildeten Klemmelemente 138', 138", können ein Prisma bilden, in das sich die Objekte einfügen, wie der Draufsicht der Figur 12B zu entnehmen ist. Beim Einfedern verschieben sich die Prismakonturen so, dass der theoretische Mittelpunkt immer in der Mitte der Haltevorrichtung bleibt. Auf diese Weise können mittels der Klemmelemente 138', 138" Objekte mit unterschiedlichen Durchmessern auf der gleichen Position gehalten werden.

Der Abstand der Klemmelemente 138', 138" in der horizontalen Richtung 142 ist im Ruhezustand kleiner als ein Abstand der Seitenflächen der Aufnahme 134 in der horizontalen Richtung 142. Des Weiteren kann der Abstand der Klemmelemente 138', 138" in der horizontalen Richtung 142 im Ruhezustand gleich oder kleiner als der Durchmesser des Behälters 94 in einem Klemmabschnitt ist. Der Klemmabschnitt des Behälters ist vorzugsweise ein Abschnitt des Behälters, der unterhalb der Öffnung des Behälters angeordnet ist. Insbesondere kann der Klemmabschnitt ein Halsabschnitt eines Flaschenhalses des Behälters sein. Der Abstand der Klemmelemente 138', 138" in der horizontalen Richtung 142 kann insbesondere gleich oder kleiner als der kleinste Durchmesser der Behälter 94 sein.

Um einen Behälter 94 in eine der Aufnahmen 134 einzubringen, wird der Behälter 94 in der Transferrichtung 140 von dem ersten Modul in die Aufnahme hineinbewegt, bis er in der Aufnahme 134 angeordnet ist, insbesondere bis der Behälter 94 zwischen den Klemmelementen 138', 138" angeordnet ist. Wenn der Behälter 94 in der Aufnahme 134 eingebracht worden ist, wird der Behälter mittels der Haltevorrichtung 136 senkrecht zu der Transferrichtung 140 geklemmt. Beim Einbringen wird der Behälter 94 zwischen die Klemmelemente 138', 138" eingeschoben. Dabei werden die Klemmelemente 138', 138" auseinandergedrückt. In anderen Worten werden die Klemmelemente 138', 138" werden dabei in der Klemmrichtung voneinander weiter voneinander beabstandet, so dass eine Vorspannkraft zum Klemmen des Behälters aufgebaut wird. Die Vorspannkraft zieht die Klemmelemente 138', 138" dabei zusammen, wobei der Behälter 94 geklemmt wird. Um den Behälter 94 aus der Aufnahmen 134 zu entnehmen, wird der Behälter 94 in der Transferrichtung 140 weiter zu dem zweiten Modul aus der Aufnahme 134 hinausbewegt, bis der Behälter außerhalb der Aufnahme 134 angeordnet ist.

Des Weiteren ist jede Haltevorrichtung 136 derart ausgebildet sein, dass sie verschiedenen Behälter 94 mit unterschiedlicher Geometrie in der jeweiligen Aufnahme 134 halten kann. Wie zuvor beschrieben, sind die Klemmelemente 138', 138" so nah aneinander angeordnet, dass beim Einführen des Behälters 94 in die Aufnahme 134 der Behälter die Klemmelemente 138', 138" auseinanderdrückt. Je nach Behälterdurchmesser werden die Klemmelemente 138', 138" entsprechend weit auseinandergedrückt. Auf diese Weise wird erreicht, dass verschiedene Behälter 94 mit unterschiedlicher Geometrie, insbesondere mit unterschiedlichem Durchmesser, mittels der Haltevorrichtung 136 in der Aufnahme 134 gehalten werden können.

Die Übergabestation 130 kann des Weiteren verschließbar sein, um die Module voneinander zu isolieren. Dazu kann die Übergabestation 130 beispielsweise eine Abdeckvorrichtung aufweisen, mittels der zumindest eine Seite der Öffnung 132 komplett verdeckt werden kann.

In den Figuren 11 und 12A sind zwei Behälter 94 in zwei der vier Aufnahmen 134 angeordnet. Die Behälter 94 sind als Flaschen ausgebildet.

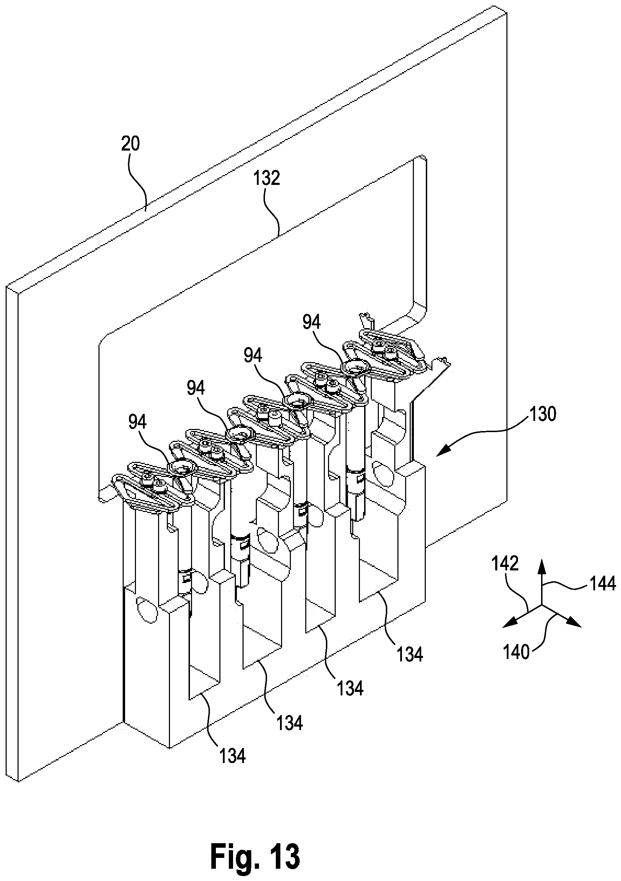

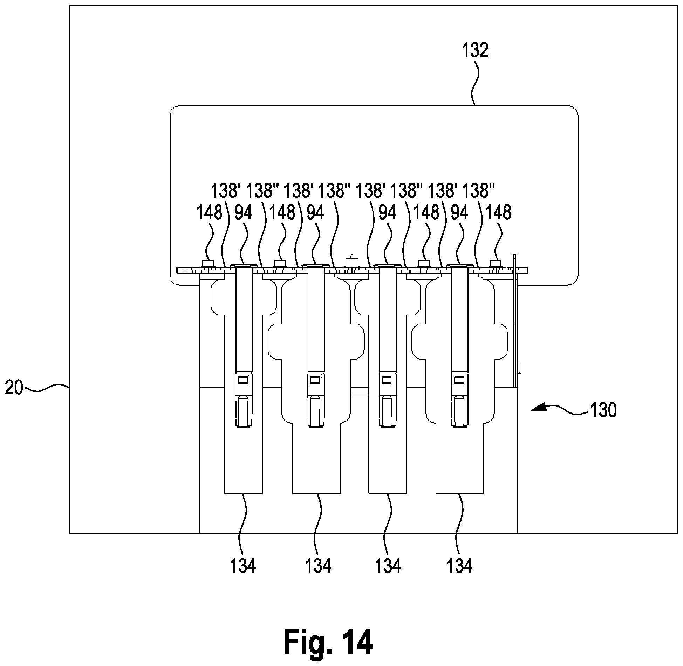

In den Figuren 13 und 14 sind vier Behälter in den vier Aufnahmen 134 angeordnet. In anderen Worten ist in jeder Aufnahme 134 ein Behälter 94 angeordnet. Die Behälter 94 sind als Spritzen ausgebildet.

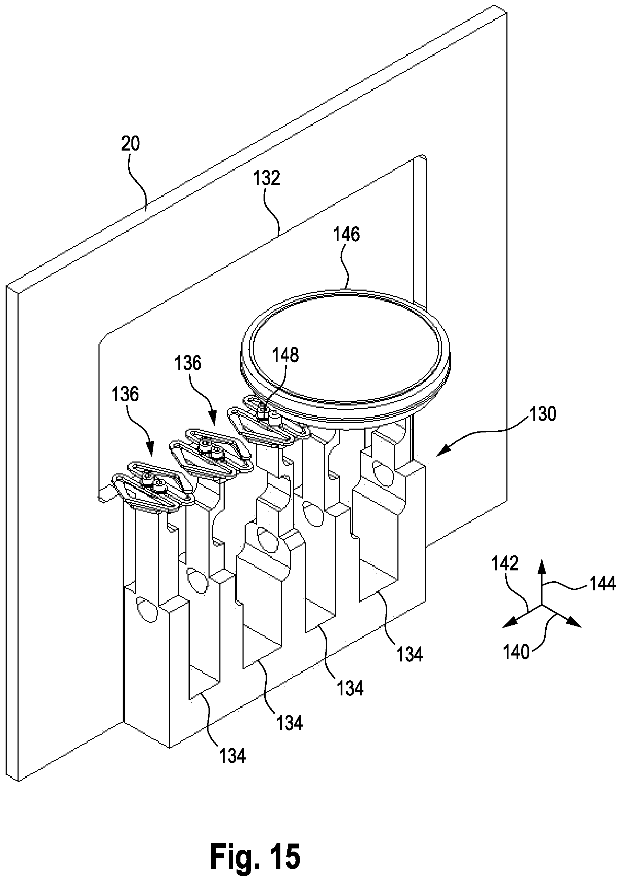

In Fig. 15 ist dargestellt, dass auch eine Petrischale 146 mittels der Übergabestation 130 übergeben werden kann. Die Petrischale 146 kann dazu in der Öffnung 132 auf die Übergabestation 130 aufgesetzt werden. Die Petrischale 146 kann dabei auf den Klemmelementen der 138', 138" der Haltevorrichtung 136 aufliegen. Alternativ kann die Übergabestation 130 Auflageelemente 148 aufweisen, auf die die Petrischale 146 aufgelegt werden kann. Die Auflageelemente 148 sind zwischen den Aufnahmen 134 angeordnet. Die Auflageelemente 148 erstrecken sich in der vertikalen Richtung 144 höher als die Aufnahmen 134 und die Haltevorrichtungen 136. Die Auflageelemente 148 können als Noppen ausgebildet sein.

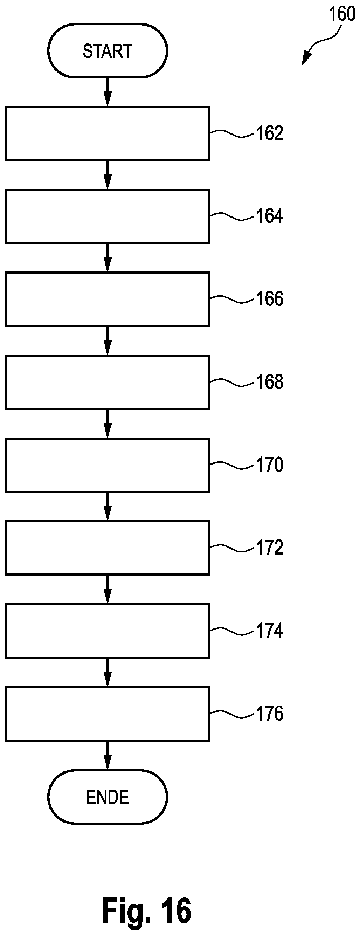

Fig. 16 zeigt eine erste Ausführungsform eines Verfahrens 160 zum Füllen eines Behälters 94 mit einer Flüssigkeit in einem Füllmodul 14. Das Verfahren 160 kann mittels des Isolatorsystems 10 aus einer der Figuren 1 bis 3 durchgeführt werden. Insbesondere kann die Steuerungseinrichtung 68 des Isolatorsystems 10 dazu ausgebildet sein, das Isolatorsystem 10 entsprechend der Verfahrensschritte des Verfahrens 160 zu steuern.

In einem ersten Schritt 162 des Verfahrens 160 wird der zu füllende Behälter 94 in der ersten Übergabestation 22 zum Übergeben des Behälters 94 in das Füllmodul 14 angeordnet.

In einem weiteren Schritt 164 des Verfahrens 160 wird der Behälter mittels einer Handhabungseinrichtung der Mehrzahl von Handhabungseinrichtungen 42, 44 des Füllmoduls 14 aus einer Aufnahme der ersten Übergabestation 22 entnommen, wobei die erste Übergabestation 22 mindestens eine Aufnahme für den Behälter 94 aufweist. Der Behälter 94 wird insbesondere mittels der ersten Handhabungseinrichtung 42 aus der Aufnahme der Übergabestation 22 entnommen.

In einem weiteren Schritt 166 des Verfahrens 160 wird der Behälter 94 mittels einer oder mehrerer Handhabungseinrichtungen der Mehrzahl von Handhabungseinrichtungen 42, 44 des Füllmoduls 14 von der ersten Übergabestation 22 zu der Füllstation 38 des Füllmoduls 14 transferiert. Der Behälter 94 wird insbesondere mittels der ersten Handhabungseinrichtung 42 von der Übergabestation 22 zu der Füllstation 38 transferiert.

In einem weiteren Schritt 168 des Verfahrens 160 wird der Behälter 94 in der Füllstation 38 mit der Flüssigkeit gefüllt.

In einem weiteren Schritt 170 des Verfahrens 160 wird der Behälter 94 mittels einer oder mehrerer Handhabungseinrichtungen der Mehrzahl von Handhabungseinrichtungen 42, 44 des Füllmoduls 14 von der Füllstation 38 zu der Stopfensetzstation 40 transferiert. Der Behälter 94 wird insbesondere mittels der ersten und/oder der zweiten Handhabungseinrichtung 42, 44 von der Übergabestation 22 zu der Füllstation 38 transferiert.

Insbesondere kann in dem Schritt 170 die erste Handhabungseinrichtung 42 den Behälter 94 von der Füllstation 38 zu der Zwischenstation 46 transferieren und die zweite Handhabungseinrichtung 44 den Behälter 94 von der Zwischenstation 46 zu der Stopfensetzstation 40 transferieren.

In einem weiteren Schritt 172 des Verfahrens 160 wird ein Stopfen auf den Behälter 94 aufgesetzt.

In einem weiteren Schritt 174 des Verfahrens 160 wird der Behälter 94 mittels einer oder mehrerer Handhabungseinrichtungen der Mehrzahl von Handhabungseinrichtungen 42, 44 des Füllmoduls 14 von der Stopfensetzstation 40 zu der zweiten Übergabestation 24 transferiert. Der Behälter 94 wird insbesondere mittels der zweiten Handhabungseinrichtung 44 von der Stopfensetzstation 40 zu der zweiten Übergabestation 24 transferiert.

In einem weiteren Schritt 176 des Verfahrens 160 wird der Behälter 94 mittels einer oder mehrerer Handhabungseinrichtungen der Mehrzahl von Handhabungseinrichtungen 42, 44 des Füllmoduls 14 in eine Aufnahme der zweiten Übergabestation 24 eingesetzt oder eingebracht, wobei die zweite Übergabestation 24 mindestens eine Aufnahme für den Behälter 94 aufweist. Der Behälter 94 wird insbesondere mittels der zweiten Handhabungseinrichtung 44 in die Aufnahme der Übergabestation 24 eingesetzt.

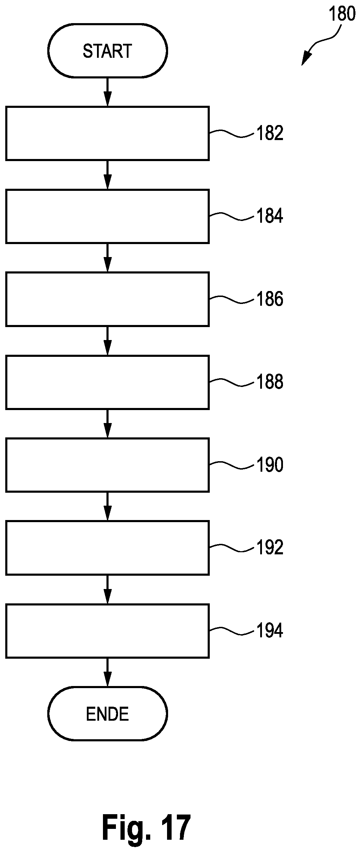

Fig. 17 zeigt eine zweite Ausführungsform eines Verfahrens 180 zum Füllen eines Behälters 94 mit einer Flüssigkeit in einem Füllmodul 14. Das Verfahren 180 kann mittels des Isolatorsystems 10 aus einer der Figuren 1 bis 3 durchgeführt werden. Insbesondere kann die Steuerungseinrichtung 68 des Isolatorsystems 10 dazu ausgebildet sein, das Isolatorsystem 10 entsprechend der Verfahrensschritte des Verfahrens 180 zu steuern.

Die Schritte 182, 184 und 186 des Verfahrens 180 entsprechen den Schritten 162, 164 und 166 des Verfahrens 160.

In einem weiteren Schritt 188 des Verfahrens 180 wird der Behälter 94 vor dem Füllen mittels der Wiegeeinrichtung 110 gewogen.

In einem weiteren Schritt 190 des Verfahrens 180 wird der Behälter 94 in der Füllstation 38, insbesondere mittels einer Füllnadel 106 der Füllstation 38, mit der Flüssigkeit gefüllt.

In einem weiteren Schritt 192 des Verfahrens 180 wird der Behälter 94 mittels der ersten Handhabungseinrichtung 42 relativ zu der Füllnadel 106 bewegt, während der Behälter 94 gefüllt wird.

In einem weiteren Schritt 194 des Verfahrens 180 wird der Behälter 94 nach dem Füllen mittels der Wiegeeinrichtung 110 gewogen.

Der Behälter 94 kann mittels der ersten Handhabungseinrichtung 42 vor dem Füllen und/oder nach dem Füllen auf der Wiegeeinrichtung zum Wiegen abgestellt werden.

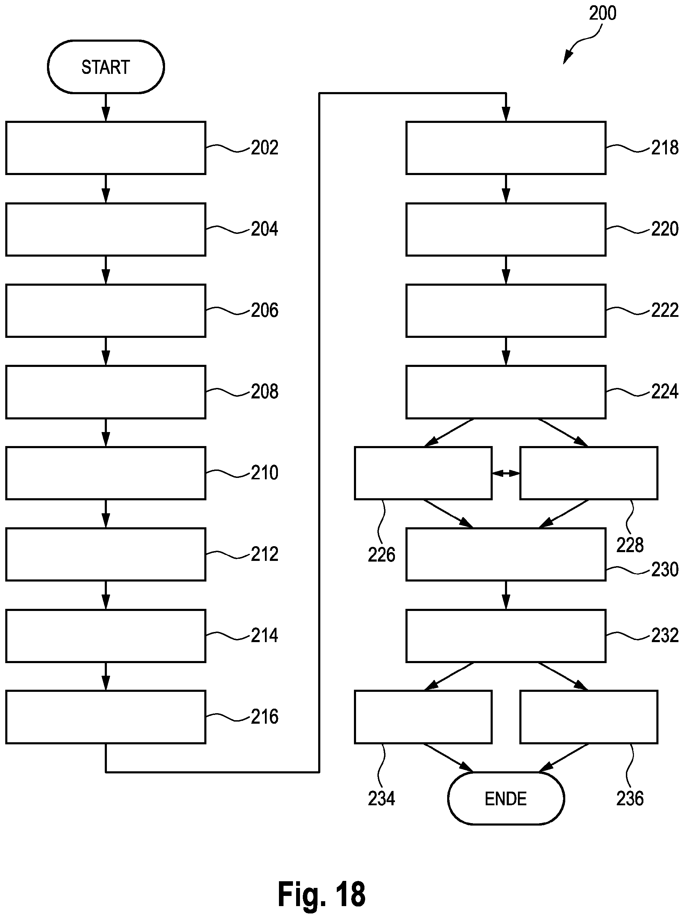

Fig. 18 zeigt eine dritte Ausführungsform eines Verfahrens 200 zum Füllen eines Behälters 94 mit einer Flüssigkeit in einem Füllmodul 14. Das Verfahren 200 kann mittels des Isolatorsystems 10 aus einer der Figuren 1 bis 3 durchgeführt werden. Insbesondere kann die Steuerungseinrichtung 68 des Isolatorsystems 10 dazu ausgebildet sein, das Isolatorsystem 10 entsprechend der Verfahrensschritte des Verfahrens 200 zu steuern.

In einem ersten Schritt 202 des Verfahrens 200 wird der zu füllende Behälter 94 mittels eines Entnahmemoduls 12 aus einem Nest 92 entnommen.

Die Schritte 204 bis 216 entsprechen den Schritten 182 bis 194 des Verfahrens 180.

Die Schritte 218 bis 224 entsprechen den Schritten 170 bis 176 des Verfahrens 160.

In einem weiteren optionalen Schritt 226 des Verfahrens 200 wird der gefüllte Behälter 94 mittels eines Gefriertrocknungsmoduls 70 gefriergetrocknet.

In einem weiteren optionalen Schritt 228 des Verfahrens 200 wird der gefüllte Behälter 94 mittels eines Transfermoduls 80 zwischen dem Füllmodul 14, dem Gefriertrocknungsmodul 70 und dem Bördelmodul 16 transferiert.

In einem weiteren Schritt 230 des Verfahrens 200 wird der gefüllte Behälter 94 mittels eines Bördelmoduls 16 verschlossen.

In einem weiteren Schritt 232 des Verfahrens 200 wird der verschlossene Behälter 94 außengewaschen.

In einem weiteren optionalen Schritt 234 des Verfahrens 200 wird der Behälter 94 nach dem Außenwaschen mittels einer Transportvorrichtung einzeln abgeführt.

Alternativ wird in einem weiteren optionalen Schritt 236 des Verfahrens 200 der Behälter nach dem Außenwaschen 94 in das Nest, aus dem er entnommen wurde, rückgeführt. Dazu wird der Behälter 94 durch die einzelnen Module zurück in das Entnahmemodul 12 transferiert, in dem er dann in das Nest wieder eingesetzt wird.

Jedes Modul kann mit der Dekontaminationseinrichtung 66 gekoppelt werden. Das Modul kann dann mittels der Dekontaminationseinrichtung 66 dekontaminiert werden. Das Koppeln kann dabei über die Lüftungseinrichtung 65 erfolgen.

Des Weiteren kann jede Übergabestation 130 des Moduls, insbesondere während des Dekontaminierens, verschlossen werden, um das Modul von benachbarten Modulen zu isolieren.

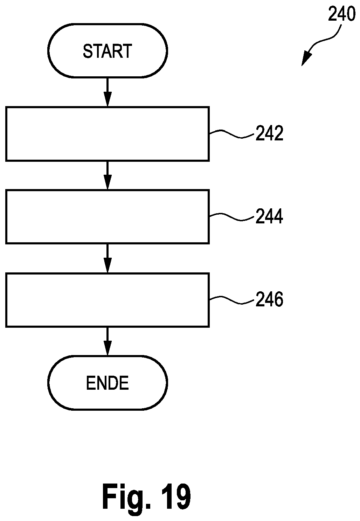

Fig. 19 zeigt eine Ausführungsform eines Verfahrens 240 zum Übergeben eines Behälters 94 von einem ersten Modul zu einem zweiten Modul mittels einer Übergabestation 130. Die Übergabestation 130 kann entsprechend der Übergabestation 130 aus den Figuren 11 bis 15 ausgebildet sein. Die zwei Module können zwei benachbarte Module des Isolatorsystems 10 aus einer der Figuren 1 bis 3 sein. Insbesondere kann die Steuerungseinrichtung 68 des Isolatorsystems 10 dazu ausgebildet sein, das Isolatorsystem 10 entsprechend der Verfahrensschritte des Verfahrens 240 zu steuern.

In einem ersten Schritt 242 des Verfahrens 240 wird der Behälter 94 mittels einer Handhabungseinrichtung des ersten Moduls in der Transferrichtung 140 in die Aufnahme 134 eingebracht.

In einem weiteren Schritt 244 des Verfahrens 240 wird der Behälter mittels der Haltevorrichtung 136 in der Aufnahme 134 gehalten.

In einem weiteren Schritt 246 des Verfahrens 240 wird der Behälter 94 mittels einer Handhabungseinrichtung des zweiten Moduls in der Transferrichtung 140 aus der Aufnahme 134 entnommen.

Der optionale Schritt 228 kann als Zwischenschritt zwischen den Schritten 224 (Übergeben aus dem Füllmodul), 226 (Gefriertrocknen) und 230 (Verschließen) durchgeführt werden. Insbesondere kann mittels des Transfermoduls 80 der Behälter 94 von dem Füllmodul 14 direkt an das Bördelmodul 16 weitergegeben werden, ohne dass der Behälter gefriergetrocknet wird. Alternativ kann mittels des Transfermoduls 80 der Behälter 94 von dem Füllmodul 14 an das Gefriertrocknungsmodul 70 zum Gefriertrocknen des Behälters übergeben werden. Nach dem Gefriertrocknen kann mittels des Transfermoduls 80 der Behälter 94 von dem Gefriertrocknungsmodul 70 an das Bördelmodul 16 weitergegeben werden.

Des Weiteren weist die vorliegende Offenbarung Ausführungsformen gemäß der folgenden Klauseln auf:
Klausel 1. Isolatorsystem (10) zum Füllen eines Behälters (94) mit einer Flüssigkeit, wobei das Isolatorsystem (10) aufweist:
   - ein Füllmodul (14) mit einer Füllstation (38) zum Füllen des Behälters (94) mit der Flüssigkeit, mit einer Stopfensetzstation(40) zum Aufsetzen eines Stopfens auf den gefüllten Behälter (94) und mit einer Mehrzahl von Handhabungseinrichtungen (42, 44) zum Handhaben des Behälters (94) innerhalb des Füllmoduls (14);
   - eine erste Übergabestation (22) zum Übergeben des zu füllenden Behälters (94) in das Füllmodul (14);
   - eine zweite Übergabestation (24) zum Übergeben des gefüllten Behälters (94) aus dem Füllmodul (14); und
   - eine Steuerungseinrichtung (68),
   wobei die Steuerungseinrichtung (68) dazu eingerichtet ist, die Füllstation (38), die Stopfensetzstation (40) und die Mehrzahl von Handhabungseinrichtungen (42, 44) derart zu steuern, dass die folgenden Schritte ausgeführt werden:
   - erstes Transferieren des zu füllenden Behälters (94) von der ersten Übergabestation (22) zu der Füllstation (38) mittels einer oder mehrerer Handhabungseinrichtungen der Mehrzahl von Handhabungseinrichtungen (42, 44);
   - Füllen des Behälters (94) mit der Flüssigkeit in der Füllstation (38);
   - zweites Transferieren des Behälters (94) von der Füllstation (38) zu einer Stopfensetzstation (40) mittels einer oder mehrerer Handhabungseinrichtungen der Mehrzahl von Handhabungseinrichtungen (42, 44);
   - Aufsetzen eines Stopfens auf den gefüllten Behälter (94) in der Stopfensetzstation (40);
   - drittes Transferieren des Behälters (94) von der Stopfensetzstation (40) zu der zweiten Übergabestation (24) mittels einer oder mehrerer Handhabungseinrichtungen der Mehrzahl von Handhabungseinrichtungen (42, 44).
Klausel 2. Isolatorsystem nach Klausel 1, wobei die Mehrzahl von Handhabungseinrichtungen eine erste Handhabungseinrichtung und eine zweite Handhabungseinrichtung aufweist.
Klausel 3. Isolatorsystem nach Klausel 2, wobei der Schritt des ersten Transferierens mittels der ersten Handhabungseinrichtung, der Schritt des zweiten Transferierens mittels der ersten Handhabungseinrichtung und/oder der zweiten Handhabungseinrichtung und der Schritt des dritten Transferierens mittels der zweiten Handhabungseinrichtung durchgeführt werden.
Klausel 4. Isolatorsystem nach Klausel 3, wobei das Füllmodul zwischen der Füllstation und der Stopfensetzstation eine Zwischenstation aufweist, wobei in dem Schritt des zweiten Transferierens die erste Handhabungseinrichtung den Behälter von der Füllstation zu der Zwischenstation transferiert, und die zweite Handhabungseinrichtung den Behälter von der Zwischenstation zu der Stopfensetzstation transferiert.
Klausel 5. Isolatorsystem nach einem der Klauseln 1 bis 4, wobei das Isolatorsystem des Weiteren ein Entnahmemodul zum Entnehmen des zu füllenden Behälters aus einem Nest aufweist.
Klausel 6. Isolatorsystem nach Klausel 5, wobei das Entnahmemodul stromaufwärts von dem Füllmodul angeordnet ist.
Klausel 7. Isolatorsystem nach Klausel 5 oder 6, wobei die erste Übergabestation zwischen dem Entnahmemodul und dem Füllmodul angeordnet ist.
Klausel 8. Isolatorsystem nach einem der Klauseln 1 bis 7, wobei das Isolatorsystem des Weiteren ein Bördelmodul zum Verschließen des gefüllten Behälters aufweist.
Klausel 9. Isolatorsystem nach Klausel 8, wobei das Bördelmodul stromabwärts von dem Füllmodul angeordnet ist, insbesondere wobei das Füllmodul zwischen dem Entnahmemodul und dem Bördelmodul angeordnet ist.
Klausel 10. Isolatorsystem nach Klausel 8 oder 9, wobei die zweite Übergabestation zwischen dem Füllmodul und dem Bördelmodul angeordnet ist.
Klausel 11. Isolatorsystem nach einem der Klauseln 1 bis 10, wobei das Isolatorsystem des Weiteren ein Gefriertrocknungsmodul zum Gefriertrocknen der gefüllten Behälter aufweist.
Klausel 12. Isolatorsystem nach Klausel 11, wobei das Gefriertrocknungsmodul stromabwärts von dem Füllmodul angeordnet ist, insbesondere wobei das Gefriertrocknungsmodul zwischen dem Füllmodul und dem Bördelmodul angeordnet ist.
Klausel 13. Isolatorsystem nach Klausel 11 oder 12, wobei die zweite Übergabestation zwischen dem Füllmodul und dem Gefriertrocknungsmodul angeordnet ist.
Klausel 14. Isolatorsystem nach einem der Klauseln 11 bis 13, wobei das Isolatorsystem des Weiteren zwischen dem Bördelmodul und dem Gefriertrocknungsmodul eine dritte Übergabestation zum Übergeben des Behälters zwischen dem Bördelmodul und dem Gefriertrocknungsmodul aufweist.
Klausel 15. Isolatorsystem nach einem der Klauseln 1 bis 14, wobei das Isolatorsystem des Weiteren ein Transfermodul zum Transferieren des Behälters zwischen dem Füllmodul, dem Bördelmodul und dem Gefriertrocknungsmodul aufweist.
Klausel 16. Isolatorsystem nach Klausel 15, wobei das Transfermodul zwischen dem Füllmodul, dem Bördelmodul und dem Gefriertrocknungsmodul angeordnet ist.
Klausel 17. Isolatorsystem nach Klausel 15 oder 16, wobei die zweite Übergabestation zwischen dem Füllmodul und dem Transfermodul angeordnet ist.
Klausel 18. Isolatorsystem nach einem der Klauseln 15 bis 17, wobei das Isolatorsystem des Weiteren zwischen dem Transfermodul und dem Bördelmodul eine vierte Übergabestation zum Übergeben des Behälters zwischen dem Transfermodul und dem Bördelmodul aufweist, und wobei das Isolatorsystem des Weiteren zwischen dem Transfermodul und dem Gefriertrocknungsmodul eine fünfte Übergabestation zum Übergeben des Behälters zwischen dem Transfermodul und dem Gefriertrocknungsmodul aufweist.
Klausel 19. Isolatorsystem nach einem der Klauseln 1 bis 18, wobei das Isolatorsystem des Weiteren ein Außenwaschmodul zum Außenwaschen des Behälters aufweist.
Klausel 20. Isolatorsystem nach Klausel 19, wobei das Außenwaschmodul stromabwärts von dem Bördelmodul angeordnet ist.
Klausel 21. Isolatorsystem nach Klausel 19 oder 20, wobei das Isolatorsystem des Weiteren zwischen dem Bördelmodul und dem Außenwaschmodul eine sechste Übergabestation zum Übergeben des Behälters zwischen dem Bördelmodul und dem Außenwaschmodul aufweist.
Klausel 22. Isolatorsystem nach einem der Klauseln 20 bis 21, wobei das Isolatorsystem eine Transportvorrichtung aufweist, die dazu ausgebildet, nach dem Außenwaschen den Behälter abzuführen.
Klausel 23. Isolatorsystem nach einem der Klauseln 1 bis 22, wobei das Isolatorsystem derart ausgebildet ist, dass der Behälter nach dem Füllen und Stopfensetzen in dem Füllmodul oder nach dem Verschließen in dem Bördelmodul oder nach dem Außenwaschen in dem Außenwaschmodul durch die einzelnen Module zurück zu dem Entnahmemodul transferiert wird, wobei das Entnahmemodul dazu ausgebildet ist den Behälter zurück in das Nest zu setzen, aus dem er entnommen wurde.
Klausel 24. Isolatorsystem nach einem der Klauseln 5 bis 23, wobei zwischen aufeinanderfolgenden Modulen des Isolatorsystems jeweils eine Trennwand angeordnet ist.
Klausel 25. Isolatorsystem nach Klausel 24, wobei in jeder Trennwand die jeweilige Übergabestation zum Übergeben des Behälters zwischen den entsprechenden Modulen angeordnet ist.
Klausel 26. Isolatorsystem nach einem der Klauseln 5 bis 25, wobei jedes Modul des Isolatorsystems mindestens zwei Handhabungseinrichtungen zum Handhaben des Behälters in dem entsprechenden Modul aufweist.
Klausel 27. Isolatorsystem nach einem der Klauseln 1 bis 26, wobei das Isolatorsystem des Weiteren eine Dekontaminationseinrichtung zum Dekontaminieren mindestens eines Moduls des Isolatorsystems aufweist, wobei mindestens ein Modul ausgewählt aus einer Liste umfassend das Füllmodul, das Entnahmemodul, das Bördelmodul, das Gefriertrocknungsmodul, das Transfermodul und das Außenwaschmodul mit der Dekontaminationseinrichtung koppelbar ist, um zumindest das Modul zu dekontaminieren.
Klausel 28 Isolatorsystem nach einem der Klauseln 1 bis 27, wobei jede Übergabestation verschließbar ist, um die jeweiligen benachbarten Module voneinander zu isolieren.
Klausel 29. Isolatorsystem nach einem der Klauseln 1 bis 28, wobei jede Übergabestation mindestens eine Aufnahme zum Aufnehmen des Behälters aufweist.
Klausel 30. Isolatorsystem nach Klausel 29, wobei die Aufnahme in einer Transferrichtung zwischen den angrenzenden Modulen zu den angrenzenden Modulen hin geöffnet ist, so dass der Behälter in der Transferrichtung in die Aufnahme mittels einer Handhabungseinrichtung einbringbar und in der Transferrichtung aus der Aufnahme mittels einer Handhabungseinrichtung entnehmbar ist.
Klausel 31. Isolatorsystem nach Klausel 29 oder 30, wobei jede Übergabestation eine Haltevorrichtung aufweist, die dazu ausgebildet sind, den Behälter in der jeweiligen Aufnahme zu halten.
Klausel 32. Isolatorsystem nach einem der Klauseln 1 bis 31, wobei jede Handhabungseinrichtung der Mehrzahl von Handhabungseinrichtung des Füllmoduls derart ausgebildet ist, dass sie mindestens zwei Behälter gleichzeitig handhaben kann, wobei die erste und die zweite Übergabestation derart ausgebildet sind, dass mindestens zwei Behälter gleichzeitig übergeben werden können, insbesondere wobei jede Übergabestation mindestens zwei Aufnahmen zum Aufnehmen jeweils eines Behälters aufweist.
Klausel 33. Isolatorsystem nach einem der Klauseln 1 bis 32, wobei jedes Modul derart ausgebildet ist, dass zwei Behälter gleichzeitig handhabbar sind.
Klausel 34. Isolatorsystem nach einem der Klauseln 1 bis 33, wobei die Füllstation eine Füllnadel zum Abgeben der Flüssigkeit aufweist, wobei in dem Schritt des Füllens der Behälter mittels der Füllnadel gefüllt wird, insbesondere wobei die Füllnadel zum Füllen durch eine Öffnung des Behälters in den Behälter eingeführt wird.
Klausel 35. Isolatorsystem nach Klausel 34, wobei die Steuerungseinrichtung dazu eingerichtet ist, die erste Handhabungseinrichtung derart zu steuern, dass der folgende Schritt ausgeführt wird:
   - Bewegen des Behälters relativ zu der Füllnadel mittels der ersten Handhabungseinrichtung, während der Behälter gefüllt wird.
Klausel 36. Isolatorsystem nach Klausel 35, wobei zu Beginn des Füllens eine Spitze der Füllnadel am dem Boden des Behälters angeordnet ist, und wobei im Schritt des Bewegens der Behälter derart bewegt wird, dass die Spitze der Füllnadel vom Boden in Richtung der Öffnung des Behälters versetzt wird.
Klausel 37. Isolatorsystem nach einem der Klauseln 1 bis 36, wobei die Füllstation eine Wiegeeinrichtung zum Wiegen des Behälters aufweist.
Klausel 38. Isolatorsystem nach Klausel 37, wobei die Steuerungseinrichtung dazu eingerichtet ist, die erste Handhabungseinrichtung derart zu steuern, dass die erste Handhabungseinrichtung den Behälter vor dem Füllen und/oder nach dem Füllen auf Wiegeeinrichtung zum Wiegen abstellt.
Klausel 39. Isolatorsystem nach Klausel 37 oder 38, wobei die Wiegeeinrichtung unterhalb der Füllnadel angeordnet ist.
Klausel 40. Verfahren (160) zum Füllen eines Behälters (94) mit einer Flüssigkeit in einem Füllmodul (14) eines Isolatorsystems (10), wobei das Verfahren die folgenden Schritte aufweist:
   - Anordnen des zu füllenden Behälters (94) in einer ersten Übergabestation (22) zum Übergeben des Behälters (94) in das Füllmodul (14);
   - erstes Transferieren des Behälters (94) von der ersten Übergabestation (22) zu einer Füllstation (38) des Füllmoduls (14) mittels einer oder mehrerer Handhabungseinrichtungen einer Mehrzahl von Handhabungseinrichtungen (42, 44) des Füllmoduls (14);
   - Füllen des Behälters (94) mit der Flüssigkeit in der Füllstation (38);
   - zweites Transferieren des Behälters (94) von der Füllstation (38) zu einer Stopfensetzstation (40) des Füllmoduls (38) mittels einer oder mehrerer Handhabungseinrichtungen der Mehrzahl von Handhabungseinrichtungen (42, 44);
   - Aufsetzen eines Stopfens auf den Behälter (94) in der Stopfensetzstation (40);
   - drittes Transferieren des Behälters (94) von der Stopfensetzstation (40) zu einer zweiten Übergabestation (24) zum Übergeben des Behälters (94) aus dem Füllmodul (14) mittels einer oder mehrerer Handhabungseinrichtungen der Mehrzahl von Handhabungseinrichtungen (42, 44).
Klausel 41. Verfahren (180) zum Füllen eines Behälters (94) mit einer Flüssigkeit in einem Füllmodul (14) eines Isolatorsystems (10), wobei das Verfahren die folgenden Schritte aufweist:
   - Anordnen des zu füllenden Behälters (94) in einer ersten Übergabestation (22) zum Übergeben des Behälters (94) in das Füllmodul (14);
   - erstes Transferieren des Behälters (94) von der ersten Übergabestation (22) zu einer Füllstation (38) des Füllmoduls (14) mittels einer ersten Handhabungseinrichtung (42) des Füllmoduls (14);
   - Füllen des Behälters (94) mit der Flüssigkeit in der Füllstation (38) mittels einer Füllnadel (106) der Füllstation (38);
   - Bewegen des Behälters (94) relativ zu der Füllnadel (106) mittels der ersten Handhabungseinrichtung (42), während der Behälter (94) gefüllt wird.
Klausel 42. Verfahren nach Klausel 41, wobei die Füllnadel zum Füllen durch eine Öffnung des Behälters in den Behälter eingeführt wird.
Klausel 43. Verfahren nach Klausel 42, wobei zu Beginn des Füllens eine Spitze der Füllnadel am dem Boden des Behälters angeordnet ist, und wobei im Schritt des Bewegens der Behälter derart bewegt wird, dass die Spitze der Füllnadel vom Boden in Richtung der Öffnung des Behälters versetzt wird.
Klausel 44. Verfahren nach einem der Klauseln 40 bis 43, wobei die Füllstation eine Wiegeeinrichtung zum Wiegen des Behälters aufweist, wobei das Verfahren des Weiteren die folgenden Schritte aufweist:
   - erstes Wiegen des Behälters vor dem Füllen des Behälters mittels der Wiegeeinrichtung; und/oder
   - zweites Wiegen des Behälters nach dem Füllen des Behälters mittels der Wiegeeinrichtung.
Klausel 45. Verfahren nach Klausel 44, wobei der Behälter vor dem Füllen und/oder nach dem Füllen mittels der ersten Handhabungseinrichtung auf Wiegeeinrichtung zum Wiegen abgestellt wird.
Klausel 46. Verfahren nach Klausel 44 oder 45, wobei die Wiegeeinrichtung unterhalb der Füllnadel angeordnet ist.
Klausel 47. Verfahren nach einem der Klauseln 41 bis 46, wobei das Füllmodul des Weiteren eine Stopfensetzstation zum Aufsetzen eines Stopfens auf den gefüllten Behälter aufweist.
Klausel 48. Verfahren nach Klausel 47, wobei das Verfahren des Weiteren die folgenden Schritte aufweist:
   - zweites Transferieren des Behälters von der Füllstation zu einer Stopfensetzstation des Füllmoduls mittels der ersten Handhabungseinrichtung und/oder einer zweiten Handhabungseinrichtung; und
   - Aufsetzen eines Stopfens auf den Behälter in der Stopfensetzstation.
Klausel 49. Verfahren nach Klausel 47 oder 48, wobei das Verfahren des Weiteren den folgenden Schritt aufweist:
   - drittes Transferieren des Behälters von der Stopfensetzstation zu einer zweiten Übergabestation zum Übergeben des Behälters aus dem Füllmodul mittels der zweiten Handhabungseinrichtung.
Klausel 50. Verfahren nach einem der Klauseln 40 bis 49, wobei das Verfahren des Weiteren den folgenden Schritt aufweist:
   - Entnehmen des zu füllenden Behälters aus einem Nest mittels eines Entnahmemoduls.
Klausel 51. Verfahren nach einem der Klauseln 40 bis 50, wobei das Verfahren des Weiteren den folgenden Schritt aufweist:
   - Verschließen des gefüllten Behälters mittels eines Bördelmoduls.
Klausel 52. Verfahren nach einem der Klauseln 40 bis 51, wobei das Verfahren des Weiteren den folgenden Schritt aufweist:
   - Gefriertrocknen des gefüllten Behälters mittels eines Gefriertrocknungsmoduls.
Klausel 53. Verfahren nach Klausel 51 und Klausel 52, wobei das Verfahren des Weiteren den folgenden Schritt aufweist:
   - Transferieren des gefüllten Behälters zwischen dem Füllmodul, dem Bördelmodul und dem Gefriertrocknungsmodul mittels eines Transfermoduls.
Klausel 54. Verfahren nach Klausel 51 oder 53, wobei das Verfahren des Weiteren den folgenden Schritt aufweist
   - Außenwaschen des verschlossenen Behälters mittels eines Außenwaschmoduls.
Klausel 55. Verfahren nach Klausel 54, wobei das Verfahren des Weiteren den folgenden Schritt aufweist:
   - einzelnes Abführen des Behälters mittels einer Transportvorrichtung nach dem Außenwaschen.
Klausel 56. Verfahren nach Klausel 54, wobei das Verfahren des Weiteren den folgenden Schritt aufweist:
   - Rückführen des Behälters in das Nest, aus dem er entnommen wurde, insbesondere wobei der Behälter nach dem Füllen und Stopfensetzen in dem Füllmodul oder nach dem Verschließen in dem Bördelmodul oder nach dem Außenwaschen in dem Außenwaschmodul durch die einzelnen Module zurück in das Entnahmemodul transferiert wird, wobei das Entnahmemodul dazu ausgebildet ist den Behälter zurück in das Nest zu setzen, aus dem er entnommen wurde.
Klausel 57. Verfahren nach einem der Klauseln 40 bis 56, wobei das Verfahren des Weiteren die folgenden Schritte auf:
   - Koppeln mindestens eines Moduls ausgewählt aus einer Liste umfassend das Füllmodul, das Entnahmemodul, das Bördelmodul, das Gefriertrocknungsmodul, das Transfermodul und das Außenwaschmodul mit einer Dekontaminationseinrichtung;
   - Dekontaminieren des Moduls mittels der Dekontaminationseinrichtung.
Klausel 58. Verfahren nach Klausel 57, wobei das Verfahren des Weiteren den folgenden Schritt aufweist:
   - Verschließen jeder Übergabestation zu dem Modul, um das Modul von benachbarten Modulen zu isolieren.
Klausel 59. Verfahren nach einem der Klauseln 40 bis 58, wobei jede Übergabestation mindestens eine Aufnahme für den Behälter aufweist, wobei das Verfahren des Weiteren den Schritt aufweist:
   - Entnehmen des zu füllenden Behälters aus der Aufnahme der ersten Übergabestation mittels der ersten Handhabungseinrichtung; und
   - Einsetzen des befüllten Behälters in die Aufnahme der zweiten Übergabestation mittels der zweiten Handhabungseinrichtung.
Klausel 60. Isolatorsystem (10) zum Füllen eines Behälters (94) mit einer Flüssigkeit, wobei das Isolatorsystem (10) aufweist:
   - ein Füllmodul (14) mit einer Füllstation (38) zum Füllen des Behälters (94) mit der Flüssigkeit und mit einer ersten Handhabungseinrichtung (42) zum Handhaben des Behälters (94) innerhalb des Füllmoduls (14);
   - eine erste Übergabestation (22) zum Übergeben des zu füllenden Behälters (94) in das Füllmodul (14); und
   - eine Steuerungseinrichtung (68),
   wobei die Füllstation (38) eine Füllnadel (106) zum Abgeben der Flüssigkeit aufweist, wobei die Steuerungseinrichtung (68) dazu eingerichtet ist, die Füllstation (14) und die erste Handhabungseinrichtung (42) derart zu steuern, dass die folgenden Schritte ausgeführt werden:
   - erstes Transferieren des zu füllenden Behälters (94) von der ersten Übergabestation (22) zu der Füllstation (38) mittels der ersten Handhabungseinrichtung (42);
   - Füllen des Behälters (94) mit der Flüssigkeit in der Füllstation (38) mittels der Füllnadel (106); und
   - Bewegen des Behälters (94) relativ zu der Füllnadel (106) mittels der ersten Handhabungseinrichtung (42), während der Behälter (94) gefüllt wird.
Klausel 61. Übergabestation (130) zum Übergeben eines Behälters (94) zwischen einem ersten Modul und einem zweiten Modul, wobei die Übergabestation (130) mindestens ein Aufnahme (134) zum Aufnehmen des Behälters (94) aufweist, wobei die Aufnahme (134) in einer Transferrichtung (140) zwischen den beiden Modulen zu beiden Modulen hin geöffnet ist, so dass der Behälter (94) in der Transferrichtung in die Aufnahme (134) mittels einer Handhabungseinrichtung des ersten Moduls einbringbar und in der Transferrichtung (140) aus der Aufnahme (134) mittels einer Handhabungseinrichtung des zweiten Moduls entnehmbar ist, und wobei die Übergabestation (130) eine Haltevorrichtung (136) zum Halten des Behälters (94) in der Aufnahme (134) aufweist.
Klausel 62. Übergabestation nach Klausel 61, wobei die Aufnahme dazu ausgebildet ist, verschiedene Behälter mit unterschiedlicher Geometrie aufzunehmen, und wobei die Haltevorrichtung derart ausgebildet ist, dass sie die verschiedenen Behälter in der Aufnahme halten kann, insbesondere wobei die verschiedenen Behälter unterschiedliche Durchmesser aufweisen.
Klausel 63. Übergabestation nach Klausel 61 oder 62, wobei die Haltevorrichtung elastische Elemente aufweist, die senkrecht zu der Transferrichtung gegenüberliegend an der Aufnahme angeordnet sind, wobei die elastische Elemente derart angeordnet sind, dass sie beim Anordnen eines Behälters zwischen den elastischen Elementen auseinandergedrückt werden, insbesondere wobei eine Kontur der elastischen Elemente (138', 138") ein Prisma bildet, in das sich die Objekte einfügen.
Klausel 64. Übergabestation nach einem der Klauseln 61 bis 63, wobei die Haltevorrichtung eine Vorspanneinrichtung aufweist, die dazu ausgebildet ist, den Behälter quer, insbesondere senkrecht, zu der Transferrichtung zu klemmen.
Klausel 65. Übergabestation nach einem der Klauseln 61 oder 64, wobei die Übergabestation dazu ausgebildet ist, eine Mehrzahl von Behältern aufzunehmen, und wobei die Übergabestation eine Mehrzahl von Aufnahmen zum Aufnehmen jeweils eines Behälters aufweist.
Klausel 66. Übergabestation nach Klausel 65, wobei die Anzahl der Mehrzahl von Aufnahmen geradzahlig, insbesondere zwei, vier oder sechs ist.
Klausel 67. Übergabestation nach einem der Klauseln 61 bis 66, wobei die Übergabestation verschließbar ist, um die Module voneinander zu isolieren.
Klausel 68. Verfahren (240) zum Übergeben eines Behälters (94) zwischen einem ersten Modul und einem zweiten Modul mittels einer Übergabestation (130) mit einer Aufnahme (134) zum Aufnehmen des Behälters (94), wobei die Aufnahme (134) in einer Transferrichtung (140) zwischen den beiden Modulen zu beiden Modulen hin geöffnet ist, wobei das Verfahren die folgenden Schritte aufweist:
   - Einbringen des Behälters (94) in die Aufnahme (134) mittels einer Handhabungseinrichtung des ersten Moduls in der Transferrichtung (140);
   - Halten des Behälters (94) in der Aufnahme (134) mittels einer Haltevorrichtung (136) der Übergabestation (130); und
   - Entnehmen des Behälters (94) aus der Aufnahme (134) mittels einer Handhabungseinrichtung des zweiten Moduls in der Transferrichtung (140).

## Patentansprüche

1. Übergabestation (130) zum Übergeben eines Behälters (94) zwischen einem ersten Modul und einem zweiten Modul, wobei die Übergabestation (130) mindestens ein Aufnahme (134) zum Aufnehmen des Behälters (94) aufweist, wobei die Aufnahme (134) in einer Transferrichtung (140) zwischen den beiden Modulen zu beiden Modulen hin geöffnet ist, so dass der Behälter (94) in der Transferrichtung in die Aufnahme (134) mittels einer Handhabungseinrichtung des ersten Moduls einbringbar und in der Transferrichtung (140) aus der Aufnahme (134) mittels einer Handhabungseinrichtung des zweiten Moduls entnehmbar ist, wobei die Übergabestation (130) eine Haltevorrichtung (136) zum Halten des Behälters (94) in der Aufnahme (134) aufweist, wobei die Haltevorrichtung (136) eine Vorspanneinrichtung aufweist, die dazu ausgebildet ist, den Behälter quer, insbesondere senkrecht, zu der Transferrichtung (140) in einer definierten Position im Raum zur Übergabe zu klemmen, wobei die Vorspanneinrichtung durch zwei Klemmelemente (138', 138") ausgebildet wird, die senkrecht zu der Transferrichtung gegenüberliegend an der Aufnahme (134) angeordnet sind, und wobei die Klemmelemente (138', 138") derart angeordnet sind, dass sie beim Anordnen des Behälters zwischen den Klemmelementen (138', 138") auseinandergedrückt werden, um den Behälter zu klemmen.

2. Übergabestation (130) nach Anspruch 1, wobei die Aufnahme (134) dazu ausgebildet ist, verschiedene Behälter mit unterschiedlicher Geometrie aufzunehmen, und wobei die Haltevorrichtung (136) derart ausgebildet ist, dass sie die verschiedenen Behälter in der Aufnahme (134) halten kann.

3. Übergabestation (130) nach Anspruch 2, wobei die verschiedenen Behälter unterschiedliche Durchmesser aufweisen.

4. Übergabestation (130) nach Anspruch einem der Ansprüche 1 bis 3, wobei eine Kontur der elastischen Elemente (138', 138") ein Prisma bildet, in das sich die Objekte einfügen.

5. Übergabestation (130) nach einem der Ansprüche 1 bis 4, wobei die Übergabestation (130) dazu ausgebildet ist, eine Mehrzahl von Behältern aufzunehmen, und wobei die Übergabestation (130) eine Mehrzahl von Aufnahmen (134) zum Aufnehmen jeweils eines Behälters aufweist.

6. Übergabestation (130) nach Anspruch 5, wobei die Anzahl der Mehrzahl von Aufnahmen (134) geradzahlig ist.

7. Übergabestation (130) nach Anspruch 6, wobei die Anzahl der Mehrzahl von Aufnahmen (134) zwei, vier oder sechs ist.

8. Übergabestation (130) nach einem der Ansprüche 1 bis 7, wobei die Übergabestation (130) verschließbar ist, um die Module voneinander zu isolieren.

9. Verfahren (240) zum Übergeben eines Behälters (94) zwischen einem ersten Modul und einem zweiten Modul mittels einer Übergabestation (130) mit einer Aufnahme (134) zum Aufnehmen des Behälters (94), wobei die Aufnahme (134) in einer Transferrichtung (140) zwischen den beiden Modulen zu beiden Modulen hin geöffnet ist, wobei das Verfahren die folgenden Schritte aufweist:
- Einbringen des Behälters (94) in die Aufnahme (134) mittels einer Handhabungseinrichtung des ersten Moduls in der Transferrichtung (140);
- Halten des Behälters (94) in der Aufnahme (134) mittels einer Haltevorrichtung (136) der Übergabestation (130), wobei die Haltevorrichtung (136) eine Vorspanneinrichtung aufweist, die dazu ausgebildet ist, den Behälter quer, insbesondere senkrecht, zu der Transferrichtung (140) in einer definierten Position im Raum zur Übergabe zu klemmen, wobei die Vorspanneinrichtung durch zwei Klemmelemente (138', 138") ausgebildet wird, die senkrecht zu der Transferrichtung gegenüberliegend an der Aufnahme (134) angeordnet sind, wobei die Klemmelemente (138', 138") derart angeordnet sind, dass sie beim Anordnen des Behälters zwischen den Klemmelementen (138', 138") auseinandergedrückt werden, um den Behälter zu klemmen; und
- Entnehmen des Behälters (94) aus der Aufnahme (134) mittels einer Handhabungseinrichtung des zweiten Moduls in der Transferrichtung (140).
